# EUROPEAN PATENT APPLICATION

(11) **EP 3 438 035 A1**
(43) Date of publication of application: **06.02.2019**
(21) Application number: 18186569.2
(22) Date of filing: 31.07.2018
(51) Int. Cl.: B66B 7/00

(54) **WIRELESS POWER TRANSMISSION SYSTEM**

(30) Priority: 31.07.2017 JP 2017148046
(71) Applicant: Panasonic Intellectual Property Management Co., Ltd., Osaka-shi, Osaka 540-6207 (JP)
(72) Inventor: KANNO, Hiroshi, Osaka-shi,, Osaka 540-6207 (JP)
(74) Representative: Grünecker Patent- und Rechtsanwälte PartG mbB

(57) **Abstract**

A wireless power transmission system for use in an elevator system includes a power transmitting electrode unit including at least two power transmitting electrodes, and a power receiving electrode unit arranged on a carriage and including at least two power receiving electrodes for receiving electric power output from the at least two power transmitting electrodes. The power transmitting electrode unit is arranged so as to oppose at least a portion of the power receiving electrode unit when the carriage is at rest at a predetermined power-supplying floor and is extended in at least one of an upward direction and a downward direction. Electric power is transmitted from the power transmitting electrode unit to the power receiving electrode unit when the carriage is at rest at the power-supplying floor, when the carriage is accelerating off the power-supplying floor, and/or when the carriage is decelerating toward the power-supplying floor.

## Description

### BACKGROUND

### 1. Technical Field:

The present disclosure relates to an elevator system, a wireless power transmission system, a power transmitting device, a power transmitting electrode unit, and a power transmission method.

### 2. Description of the Related Art:

With conventional elevator systems, a power line called a "tail cord" is attached to a carriage of an elevator. Electric power is supplied to devices in the carriage through the tail cord. However, the following problems may occur as buildings grow taller and the tail cords longer. For example, problems such as elongation, break and crack of the tail cord are more likely to occur. There is a need for frequent inspections in order to prevent such problems. Moreover, with a longer tail cord, the effect of a voltage drop is no longer negligible.

Elevator systems have been discussed that supply electric power to the carriage without needing a tail cord, with the introduction of a wireless power transmission (WPT) system. For example, Japanese Laid-Open Patent Publication No. 2013-71796 discloses an elevator system in which power is wirelessly supplied to the battery in the carriage from a power supply device installed at a power supply floor.

### SUMMARY

With the conventional technique, efficient charging is possible only while the carriage is at rest.

The present disclosure provides an elevator system with which charging is possible not only while the carriage is at rest but also while the carriage is in motion.

A wireless power transmission system according to one embodiment of the present disclosure is:
a wireless power transmission system for use in an elevator system including a carriage that moves up and down along a path, a power storing device provided in the carriage, and a wireless power transmission system, the wireless power transmission system including:
a power transmitting electrode unit arranged along the path and including at least two power transmitting electrodes for outputting AC power; and
a power receiving electrode unit arranged on the carriage and including at least two power receiving electrodes that respectively oppose the at least two power transmitting electrodes for receiving the output AC power, wherein:
the power transmitting electrodes are longer than the power receiving electrodes;
the power transmitting electrode unit is arranged so as to oppose at least a portion of the power receiving electrode unit when the carriage is at rest at a predetermined power-supplying floor and is extended in at least one of an upward direction and a downward direction;
electric power is transmitted from the power transmitting electrode unit to the power receiving electrode unit when the carriage is at rest at the power-supplying floor, when the carriage is accelerating off the power-supplying floor, and/or when the carriage is decelerating toward the power-supplying floor; and
the power storing device is charged by the electric power received by the power receiving electrode unit.

The general or specific aspects of the present disclosure may be implemented using a system, a device, a method, an integrated circuit, a computer program or a storage medium, or any combination of systems, devices, methods, integrated circuits, computer programs, and storage media.

According to one embodiment of the present disclosure, wireless charging is possible only while the carriage is at rest but also while the carriage is in motion.

Additional benefits and advantages of the disclosed embodiments will be apparent from the specification and

Figures. The benefits and/or advantages may be individually provided by the various embodiments and features of the specification and drawings disclosure, and need not all be provided in order to obtain one or more of the same.

### BRIEF DESCRIPTION OF THE DRAWINGS

FIG. **1A** is a configuration diagram illustrating a configuration of an elevator system according to an illustrative embodiment of the present disclosure.
FIG. **1B** is a diagram showing a power transmitting electrode unit and a power receiving electrode unit according to an illustrative embodiment of the present disclosure.
FIG. **1C** is a diagram showing a configuration of a wireless power transmission system according to an illustrative embodiment of the present disclosure.
FIG. **2A** is a diagram showing an example of an arrangement of a power transmitting electrode unit of an elevator system according to an illustrative embodiment of the present disclosure.
FIG. **2B** is a diagram showing another example of an arrangement of a power transmitting electrode unit of an elevator system according to an illustrative embodiment of the present disclosure.
FIG. **2C** is a diagram showing another example of an arrangement of a power transmitting electrode unit of an elevator system according to an illustrative embodiment of the present disclosure.
FIG. **3** is a conceptual diagram of an elevator system according to an illustrative embodiment of the present disclosure.
FIG. **4** is a configuration diagram of an elevator system according to another embodiment of the present disclosure.
FIG. **5** is a configuration diagram of an elevator system according to another embodiment of the present disclosure.
FIG. **6** is a configuration diagram of an elevator system according to another embodiment of the present disclosure.
FIG. **7** is a configuration diagram of an elevator system according to another embodiment of the present disclosure.
FIG. **8** is a configuration diagram of an elevator system according to another embodiment of the present disclosure.
FIG. **9** is a configuration diagram of an elevator system according to another embodiment of the present disclosure.
FIG. **10** is a configuration diagram of an elevator system according to another embodiment of the present disclosure.
FIG. **11** is a block diagram showing an example of a WPT system introduced to an elevator system according to an illustrative embodiment of the present disclosure.
FIG. **12** is a block diagram showing another example of a WPT system introduced to an elevator system according to an illustrative embodiment of the present disclosure.
FIG. **13** is a block diagram showing another example of a WPT system introduced to an elevator system according to an illustrative embodiment of the present disclosure.
FIG. **14** is a diagram showing a structure around the carriage of a WPT system according to an illustrative embodiment of the present disclosure.
FIG. **15** is a diagram showing a structure around the carriage of a wireless power transmission system according to an illustrative embodiment of the present disclosure.
FIG. **16** is a diagram showing an example of a structure of a power transmitting electrode unit according to an illustrative embodiment of the present disclosure.
FIG. **17** is a diagram showing another example of a structure of a power transmitting electrode unit according to an illustrative embodiment of the present disclosure.
FIG. **18** is a block diagram showing a schematic configuration of a wireless power transmission system in an elevator system according to an illustrative embodiment of the present disclosure.
FIG. **19** is a diagram schematically showing a configuration example of a frequency conversion circuit 203,
FIG. **20** is a diagram schematically showing a configuration example of a frequency conversion circuit **207.**
FIG. **21** is a plan view showing an example of a power unit in a WPT system introduced to an elevator system according to an illustrative embodiment of the present disclosure.
FIG. **22** is a plan view showing another example of a power unit in a WPT system introduced to an elevator system according to an illustrative embodiment of the present disclosure.
FIG. **23** is a plan view showing still another example of a power unit in a WPT system introduced to an elevator system according to an illustrative embodiment of the present disclosure.
FIG. **24** is a diagram showing a configuration example (reference example) of a conventional elevator system.

### DETAILED DESCRIPTION

### (Findings which are basis of present disclosure)

Findings which are the basis of the present disclosure will be described before describing embodiments of the present disclosure.

The present inventors found that the following problems occur with the conventional elevator system described in "Description of the Related Art".

With the conventional technique described above, electric power is transmitted wirelessly via electromagnetic induction between the power transmitting coil and the power receiving coil, for example. The battery is charged while the power transmitting device having the power transmitting coil opposes the power receiving device having the power receiving coil. In order to charge efficiently, a high precision is required for the alignment between the power transmitting device and the power receiving device. Therefore, efficient charging is possible only while the elevator is at rest. With such a system, the battery needs to be charged within a short amount of time. As a result, it becomes normal to charge at a high charging rate, thereby allowing the battery to deteriorate faster.

With the system of Japanese Laid-Open Patent Publication No. 2013-71796, when it is detected that the carriage is on standby, the controller moves the carriage to a power-supplying floor, thus starting the charge. This system is characterized in that it is possible to ensure a relatively long charging time by using the standby time as the charging time. However, during a time slot when busy operations are demanded, the carriage cannot stop at a power-supplying floor for a long time, making it necessary to charge a lot within a short amount of time. When it becomes normal to charge at such a high charging rate, the battery deteriorates faster, thereby increasing the operation cost of the system.

In order to solve the problems described above, it is possible to employ a method in which power transmitting devices are installed at a plurality of floors. However, such a method increases the cost of the members to be introduced, and the cost of installing the power transmitting devices. Particularly, with a super high-rise building, it is necessary to install the power transmitting device at many floors, and it will be difficult to reduce the total cost.

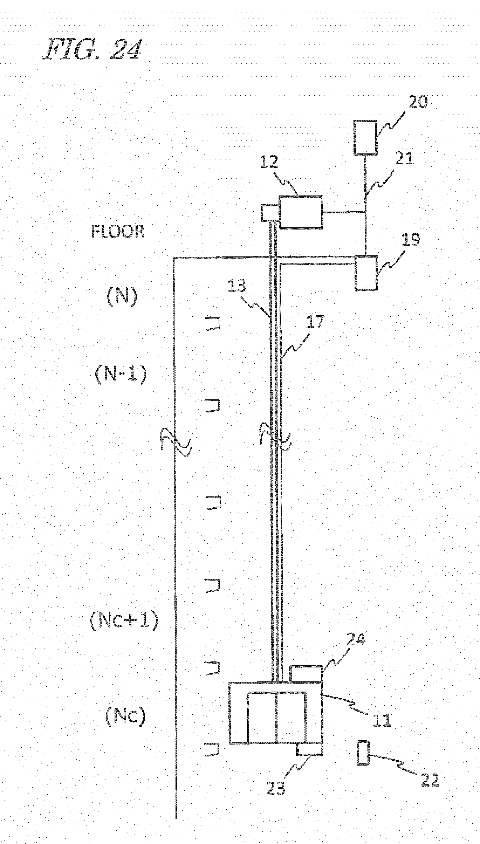

FIG. **24** is a diagram showing a configuration example of a system similar to the elevator system disclosed in Japanese Laid-Open Patent Publication No. 2013-71796. This system includes a power transmitting device **22** for transmitting electric power, a power receiving device **23** for receiving the transmitted electric power, and a battery **24** for receiving the transmitted electric power. The power transmitting device **22** includes a power transmitting coil. The power receiving device **23** includes a power receiving coil. The power receiving device **23** and the battery **24** are electrically connected to each other. The power transmitting device **22** is installed at the power-supplying floor (the Nc-th floor). The power receiving device **23** and the battery **24** are installed on a carriage **11.** The power receiving device **23** is installed at such a position that the power receiving device **23** opposes the power transmitting device **22** when the carriage **11** stops at a power-supplying floor. More specifically, electric power is transmitted while the power transmitting coil in the power transmitting device **22** and the power receiving coil in the power receiving device **23** oppose each other. The electric power stored in the battery **24** is used for operating devices in the carriage **11** (e.g., a lighting device, an air-conditioning device, a display, a security camera, a motor for opening/closing doors).

The elevator system further includes a hoisting machine **12,** a rope **13,** a transmission cable **17,** a controller **19,** a power supply device **20,** and a power line **21.** The carriage **11** is connected to one end of the rope **13.** A counter weight (not shown) is connected to the other end of the rope **13.**

The carriage **11** installed in the shaft is moved up and down by means of the hoisting machine **12** via the rope **13.** The carriage **11** is connected to the controller **19** via the transmission cable **17.** The controller **19** controls the overall operation of the elevator. The controller **19** is installed in the machine room or in the shaft. The power supply device **20** supplies electric power to the controller **19** and the hoisting machine **12** through the power line **21.** With this system, the power transmitting device **22** installed at a power-supplying floor wirelessly supplies electric power to the power receiving device **23** installed on the carriage **11.**

When the carriage **11** stops at a power-supplying floor, the power transmitting device **22** and the power receiving device **23** are aligned with each other. Then, the power transmitting coil of the power transmitting device **22** and the power receiving coil of the power receiving device **23** oppose each other, thus enabling the transmission of electric power from the power transmitting device **22** to the power receiving device **23.** With the system of Japanese Laid-Open Patent Publication No. 2013-71796, when the remaining level of the battery **24** has decreased below a predetermined level, the carriage **11** is moved to a power-supplying floor to charge the battery **24.** More specifically, when it is detected that the carriage **11** is on standby, the controller **19** moves the carriage **11** to a power-supplying floor to charge the battery. Through these operations, it is possible to ensure a relatively long charging time.

However, with the control method of Japanese Laid-Open Patent Publication No. 2013-71796, when the remaining level of the battery **24** is lowered during a busy time slot, the operation of the carriage **11** may be restricted, waiting for the battery **24** to be charged. This will detract from the utility for the users. When the battery **24** is charged within a short amount of time so as not to hinder the operation for the users, the charging rate for charging the battery **24** becomes high. Then, early deterioration of the battery **24** cannot be avoided over long-term operation. The more easily the battery **24** deteriorates, the more frequently the battery **24** is replaced. As a result, this will increase the cost needed for the battery **24.** When the capacity of the battery **24** is increased in order to avoid the deterioration of the battery **24,** the cost of the battery **24** itself will increase. This will also increases the weight of the carriage **11.** Furthermore, if there is a need for a high-power wireless power transmission system, it will increase the installation cost. Thus, the system of Japanese Laid-Open Patent Publication No. 2013-71796 will increase the total cost that is needed for long-term operation.

On the other hand, there is a wireless power transmission method called a trolley method. With this method, there is a need for installing a trolley wire over the entire pathway of the elevator. This will increase the installation cost particularly when introduced to a high-rise building. A magnetic member is arranged on the power receiving side for coupling with the high-frequency magnetic field distributed around the trolley wire, and it is not possible to set a wide gap from the trolley wire. This leaves a problem in reliability when vibrations occur due to an earthquake, or the like. Thus, the trolley method has many problems for it to be realistically introduced to an elevator.

The problem of battery deterioration described above for the configuration shown in FIG. **24** occurs because the high-efficiency power transmission between the power transmitting device **22** and the power receiving device **23** is limited to the short amount of time over which the carriage **11** is at rest at a power-supplying floor. Particularly, during a busy time slot, the stop time is limited to a very short amount of time.

The amount of time that is taken for the carriage **11** to stop at a power-supplying floor, open the doors, and then close the doors and start moving after passengers get on and off is often generally 15 seconds or less. Passengers who get on the carriage **11** at a power-supplying floor start feeling that the utility is detracted from if the carriage **11** remains at rest longer than this length of time. Therefore, with the elevator system of Japanese Laid-open Patent Publication No. 2013-71796, it is difficult to solve the problems by elongating the charging time.

The present inventors found that the problem can be solved by providing an elevator system in which charging can be done not only while the carriage **11** is at rest at a power-supplying floor but also while the carriage **11** is accelerating and/or decelerating before and after the carriage **11** comes to a stop. With such a system, it is possible to increase the charging time without detracting from the utility of the elevator for the users. As compared with conventional systems, it is possible to reduce the number of floors on which the power transmitting device is installed, and it is therefore possible to avoid an increase in the installation cost.

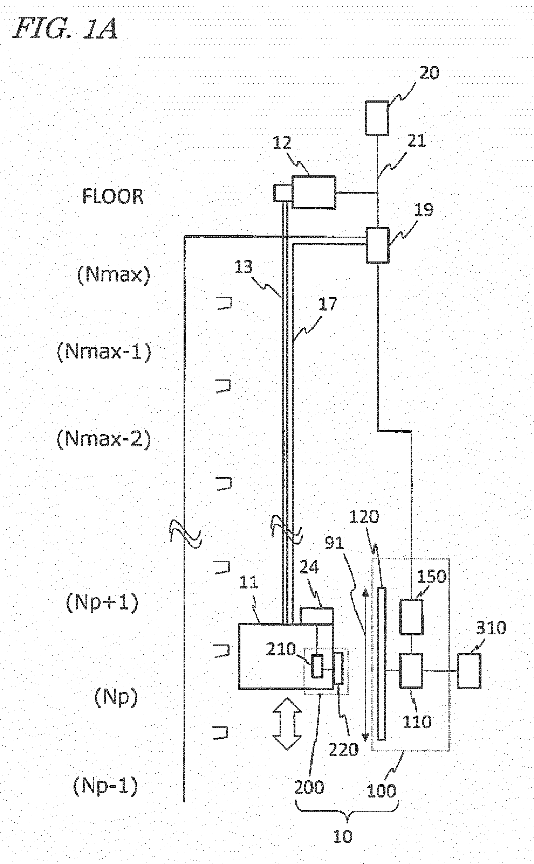

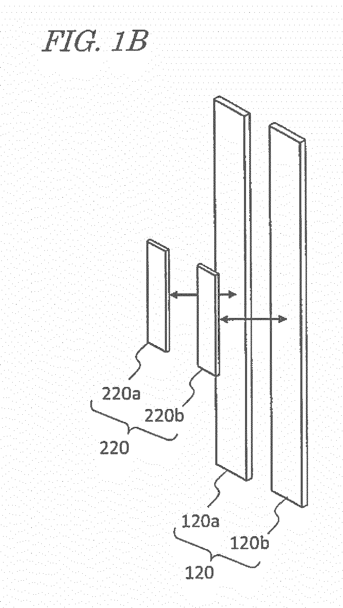

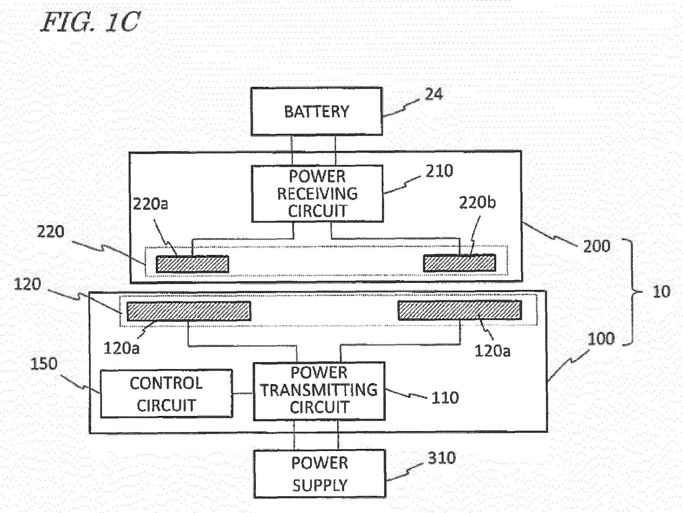

Referring to FIG. **1****,** a more specific embodiment of the present disclosure will now be described. Note however that unnecessarily detailed descriptions may be omitted. For example, detailed descriptions on what are well known in the art and redundant descriptions on substantially the same configurations may be omitted. This is to prevent the following description from becoming unnecessarily redundant, to make it easier for a person of ordinary skill in the art to understand. Note that the present inventors provide the accompanying drawings and the following description in order for a person of ordinary skill in the art to sufficiently understand the present disclosure, and they are not intended to limit the subject matter set forth in the claims. In the following description, the same or similar elements are denoted by the same reference signs.

### (Basic configuration example of embodiment of elevator system)

FIG. **1A** is a configuration diagram illustrating a configuration of an elevator system according to an illustrative embodiment of the present disclosure. The elevator system of the present embodiment includes a wireless power transmission system **10** of an electric field coupling type. The wireless power transmission system **10** includes a power transmitting device **100** and a power receiving device **200.** The power transmitting device **100** includes a power transmitting electrode unit **120** including a plurality of power transmitting electrodes, a power transmitting circuit **110,** and a control circuit **150**. The power receiving device **200** includes a power receiving electrode unit **220** including a plurality of power receiving electrodes, and a power receiving circuit **210.** The power transmitting circuit **110** is connected between the power transmitting electrode unit **120** and an external power supply **310.** The control circuit **150** is connected between the controller **19** and the power transmitting circuit **110.** The power transmitting circuit 110 supplies AC power to the power transmitting electrode unit **120** in response to an instruction from the control circuit **150.** The power receiving circuit **210** converts the AC power received by the power receiving electrode unit **220** to another form of electric power to supply the converted power to the battery **24.**

Similar to the system of FIG. **24****,** the elevator system also includes the carriage **11,** the battery **24,** the hoisting machine **12,** the controller **19** and the power supply device **20.** Hereinafter, similar components to those of the system of FIG. **24** may not be further described.

The "electric field coupling type" refers to a type of power transmission in which electric power is wirelessly transmitted from a group of power transmitting electrodes including at least two power transmitting electrodes to a group of power receiving electrodes including at least two power receiving electrodes via an electric field coupling (referred also as a capacitive coupling) between the group of power transmitting electrodes and the group of power receiving electrodes. For the sake of simplicity, an example in which the group of power transmitting electrodes and the group of power receiving electrodes are each composed of a pair of (two) electrodes will be mainly discussed. As will be described later, each of the group of power transmitting electrodes and the group of power receiving electrodes may include three or more electrodes.

The "power transmitting electrode unit" means a collection of two or more power transmitting electrodes used in the wireless power transmission (WPT) of an electric field coupling type, or a device including such a collection. The "power receiving electrode unit" means a collection of two or more power receiving electrodes used in the wireless power transmission of an electric field coupling type, or a device including such a collection. The power transmitting electrode unit and the power receiving electrode unit: may each be solely manufactured and sold as a component of an elevator system or a wireless power transmission system.

The power receiving electrode unit 220 is installed on the carriage 11. The power transmitting electrode unit 120 is arranged along the shaft, and is located so as to oppose the power receiving electrode unit **220** when transmitting power. The power transmitting electrode unit 120 covers a height extent, along the pathway of the carriage 11, that is greater than an extent of the power receiving electrode unit **220** in the height direction (the up-down direction of FIG. **1**). A power transmitting section **91** is defined as a portion of the section over which the power receiving electrode unit **220** moves that at least partially opposes the power transmitting electrode unit **120** and in which the battery **24** can be charged.

FIG. **1B** is a diagram schematically showing an example of the power transmitting electrode unit **120** and the power receiving electrode unit **220.** The power transmitting electrode unit **120** in this example includes two power transmitting electrodes **120a** and **120b.** The power receiving electrode unit **220** includes two power receiving electrodes **220a** and **220b.** Each electrode has a flat plate shape extending in one direction. The direction in which each electrode extends coincides with the direction in which the carriage **11** moves, i.e., the vertical direction. The power transmitting electrodes **120a** and **120b** are arranged substantially in parallel to each other along the shaft of the elevator system. The power receiving electrodes **220a** and **220b** are arranged substantially in parallel to each other on the side surface of the carriage **11.** The power transmitting electrodes **120a** and **120b** are longer than the power receiving electrodes **220a** and **220b.** The length of each of the power transmitting electrodes **120a** and **120b** may be set to be about 1.5 to about 100 times that of the power receiving electrodes **220a** and **220b,** for example. In the present embodiment, when the carriage **11** stops at the Np-th floor, which is a predetermined power-supplying floor, the power receiving electrodes **220a** and **220b** respectively oppose the power transmitting electrodes **120a** and **120b.**

FIG. **1C** is a block diagram showing a configuration example of the wireless power transmission system **10.** The wireless power transmission system **10** includes the power transmitting device **100** and the power receiving device **200.** FIG. **1C** also shows the power supply **310** and the battery **24,** which are elements outside of the wireless power transmission system. The power transmitting device **100** includes the power transmitting electrode unit **120,** the power transmitting circuit **110,** and the control circuit **150.** The power transmitting circuit **110** is connected between the power supply **310** and the power transmitting electrode unit **120.** The power transmitting circuit **110** may include a conversion circuit such as an inverter circuit, for example. The power transmitting circuit **110** converts electric power supplied from the power supply **310** to AC power for power transmission, and supplies the converted power to the power transmitting electrodes **120a** and **120b.** A matching circuit for improving the impedance match may be provided between the power transmitting circuit **110** and the power transmitting electrode unit **120.** The operation of the power transmitting circuit **110** is controlled by the control circuit **150**.

The control circuit **150** may be implemented by an integrated circuit such as a micro controller unit (MCU) including a processor and a memory, for example. The control circuit **150** controls the power transmitting circuit **110** in conjunction with the operation of moving the carriage **11** up and down. The control circuit **150** obtains, from the controller **19** shown in FIG. **1A****,** a signal relating to the movement of the carriage **11,** and instructs the power transmitting circuit **110** to start and end the power transmission based on the obtained signal. For example, when the power receiving electrode unit **220** approaches to such a position that electric power can be received from the power transmitting electrode unit **120,** the controller **19** instructs the power transmitting circuit **110** to start the power transmission. Conversely, when the power receiving electrode unit **220** is no longer at such a position that electric power can be received from the power transmitting electrode unit **120,** the control circuit **150** instructs the power transmitting circuit **110** to stop the power transmission. Such a control can be realized by the processor of the control circuit **150** executing a computer program stored in the memory. Note that the control circuit **150** may be built in the controller **19.**

The power receiving device **200** includes the power receiving electrode unit **220** and the power receiving circuit **210.** The power receiving circuit **210** is connected between the power receiving electrode unit **220** and the battery **24.** The power receiving circuit **210** may include a conversion circuit such as a rectifier circuit, for example. The power receiving circuit **210** rectifies the AC power received by the power receiving electrodes **220a** and **220b,** and supplies the rectified power to the battery **24.** Thus, the battery **24** is charged. Note that another type of a power storing device, such as a capacitor for storing electricity, may be used instead of the battery **24.** The power storing device may be a lithium ion secondary battery, a nickel-metal hydride secondary battery, an electric double layer capacitor, a lithium ion capacitor, or the like, for example. A matching circuit for improving the impedance match may be inserted between the power receiving electrode unit **220** and the power receiving circuit **210.**

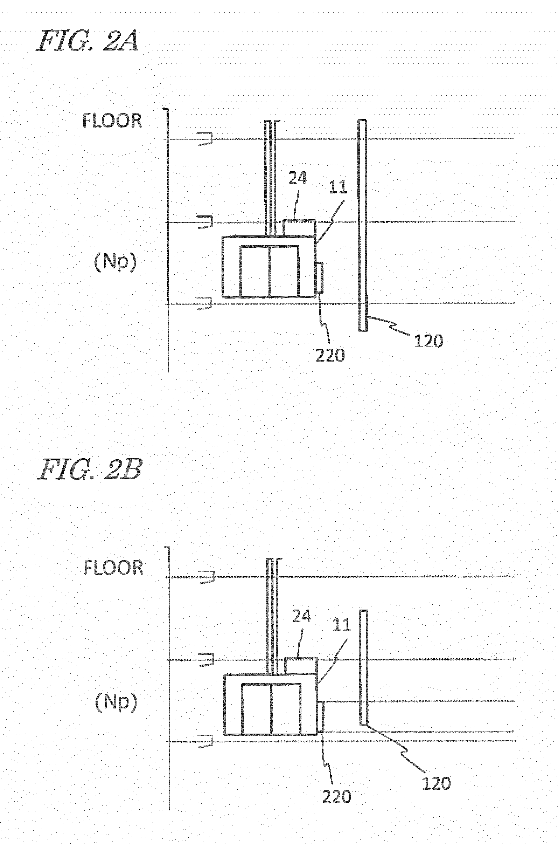

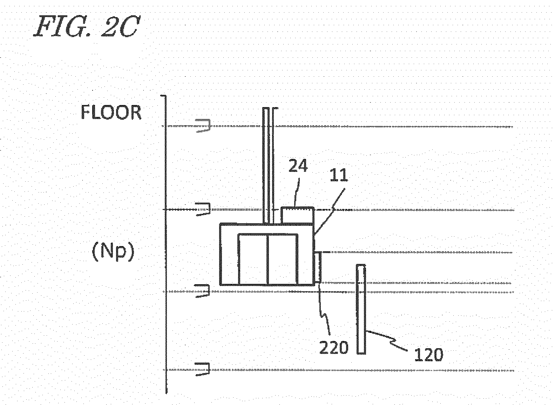

FIG. **2A** to FIG. **2C** show some examples of the arrangement of the power transmitting electrode unit **120.** The power transmitting electrode unit **120** is arranged so as to oppose at least a portion of the power receiving electrode unit **220** when the carriage **11** is at rest at the Np-th floor, which is a predetermined power-supplying floor, and is extended in at least one of the upward direction and the downward direction. In other words, the power transmitting electrode unit **120** includes a first portion that at least partially opposes the power receiving electrode unit **220** when the carriage 11 is at rest at the Np-th floor and a second portion that is an extension from the first portion in at least one of the upward and downward directions. For example, in the example shown in FIG. **2A****,** the power transmitting electrode unit **120** includes a first portion that opposes the power receiving electrode unit **220** when the carriage **11** is at rest at the Np-th floor and a second portion that is an extension from the first portion both in the upward direction and the downward direction. On the other hand, in the example shown in FIG. **2B****,** the power transmitting electrode unit **120** includes a first portion that partially opposes the power receiving electrode unit **220** when the carriage **11** is at rest at the Np-th floor and a second portion that is an extension from the first portion in the upward direction. In the example shown in FIG. **2C****,** the power transmitting electrode unit **120** includes a first portion that partially opposes the power receiving electrode unit **220** when the carriage **11** is at rest at the Np-th floor and a second portion that is an extension from the first portion in the downward direction. When at rest at the Np-th floor, the coupling between the power receiving electrode unit **220** and the power transmitting electrode unit **120** is stronger as the power receiving electrode unit **220** and the power transmitting electrode unit **120** overlap each other over a wider area as seen from the direction perpendicular to the electrodes. However, as shown in FIG. **2B** and FIG. **2C****,** there may be a portion of the power receiving electrode unit **220** that does not overlap the power transmitting electrode unit **120.** That is, as long as the power-supplying property is not affected significantly, the power receiving electrode unit **220** and the power transmitting electrode unit **120** do not need to overlap each other completely.

In the description above, the Np-th floor, which is one of the floors where the carriage **11,** being at rest thereon, is allowed to be charged, is defined as the power-supplying floor. However, the power-supplying floor is not limited to a single floor, but there may be a plurality of power-supplying floors. For example, the carriage 11 may be allowed to be charged when at rest at any of two or more adjacent floors. In such a case, not only the Np-th floor, but also the (Np-1)-th floor or the (Np+1)-th floor adjacent to the Np-th floor, may be defined as power-supplying floors. Moreover, a floor that is any number of floors away from the Np-th floor may be defined as a power-supplying floor. In other words, a plurality of power transmitting electrode units 120 may be arranged at a plurality of floors. In such a case, there are discrete power transmitting sections.

With the elevator system of the present embodiment, the battery 24 can be charged not only when the carriage 11 is at rest at a power-supplying floor, but also during deceleration before coming to a stop and/or during acceleration when starting to move from a power-supplying floor. Therefore, it is possible to ensure a charging time that is longer than the stop time of the carriage **11**.

The amount of electric power to be supplied to the battery **24** for one charging opportunity is determined based on the status of operation of the carriage **11.** With conventional systems, charging can be done only while the carriage **11** is at rest at a power-supplying floor. Therefore, the necessary electric power is determined to be a value that is obtained by dividing the amount of electric power to be supplied by the stop time. This value is referred to as the first electric power value. On the other hand, in the present embodiment, charging can be done not only during the stop time but also during at least one of the acceleration time and the deceleration time. Therefore, the electric power value obtained by dividing the necessary amount of electric power by the charging time is always a value that is lower than the first electric power value. Therefore, it is possible to reduce the charging rate for the battery **24,** thereby suppressing the deterioration of the battery **24.** Moreover, even during a busy time slot, the opportunity where the carriage **11** accelerates or decelerates arises every time the carriage **11** comes to a power-supplying floor. Therefore, with the elevator system of the present embodiment, the effect described above can be realized without detracting from the utility for the users.

As described above, the elevator system of the present embodiment includes the carriage **11** that moves up and down along a path, the battery **24** provided in the carriage **11,** and the wireless power transmission system **10.** The wireless power transmission system **10** includes the power transmitting electrode unit **120** arranged along the path and including at least two power transmitting electrodes for outputting AC power, and the power receiving electrode unit **220** arranged on the carriage **11** and including at least two power receiving electrodes that respectively oppose the at least two power transmitting electrodes for receiving the output AC power. The power transmitting electrodes are longer than the power receiving electrodes. The power transmitting electrode unit **120** includes a first portion that opposes at least a portion of the power receiving electrode unit **220** when the carriage **11** is at rest at a predetermined power-supplying floor and a second portion that is an extension from the first portion in at least one of the upward direction and the downward direction. The control circuit **150** instructs the power transmitting circuit **110** to output AC power when the carriage **11** is at rest at a power-supplying floor, when the carriage **11** is accelerating off a power-supplying floor, and/or when the carriage **11** is decelerating toward a power-supplying floor. Thus, electric power is transmitted from the power transmitting electrode unit **120** to the power receiving electrode unit **220.** The AC power received by the power receiving electrode unit **220** is rectified through the power receiving circuit **210** and supplied to the battery **24.** Thus, the battery **24** is charged.

The power transmitting electrode unit **120** may be extended so as to oppose at least a portion of the power receiving electrode unit **220** when the carriage **11** is at rest at another floor that is adjacent to a power-supplying floor. In such a case, electric power is transmitted from the power transmitting electrode unit **120** to the power receiving electrode unit **220** even when the carriage **11** is at rest at the other floor. If such a power transmitting electrode unit **120** that bridges between floors is provided, it is possible to significantly increase the charging time. Therefore, it is possible to further suppress the deterioration of the power storing device.

### (Specific example 1 of charging time elongation effect)

The effect of the elevator system of the present embodiment will now be described in greater detail. In the following description, as an example of a high-speed elevator, it is assumed that the acceleration from rest is 1 m/(sec)². The length of the power receiving electrode unit **220** in the height direction is referred to as the "power receiving electrode unit length". The length of the power transmitting electrode unit in the height direction is referred to as the "power transmitting electrode unit length". The additional length of the power transmitting electrode unit length with respect to the length of the power receiving electrode unit length is assumed to be 5 m. In this case, it takes 3.16 sec since the carriage **11** starts accelerating from rest until the end of the power receiving electrode unit **220** has moved past the power transmitting electrode unit **120.** During this length of time, the battery **24** can be charged. When the direction toward which the carriage 11 moves from rest is the same as the direction from which the carriage **11** came to a stop, the battery **24** can be further charged also during deceleration immediately before coming to a stop. Assuming that the stop time is 15 sec as described above, the total charging time is as long as 21.3 sec by realizing charging during acceleration and deceleration. That is, with the elevator system under conditions described above, it is possible to realize a 42% elongation of the charging time without detracting from the utility for the users. Table 1 shows examples of the power transmitting electrode unit length and the total charging time of the elevator system of the present embodiment, and the charging time elongation with respect to that of a system in which the battery is charged only during the stop time.

**[Table 1]**

| Additional length of power transmitting electrode unit (power receiving electrode unit length ratio) | Total charging time | Charging time elongation effect |
|---|---|---|
| 0.5 m | 17 sec | +13% |
| 1 m | 17.8 sec | +19% |
| 2 m | 19 sec | +27% |
| 3 m | 19.9 sec | +33% |
| 5 m | 21.3 sec | +42% |

As an example of a typical battery property, it is known in the art that when a battery is charged at twice a charging rate (2C) compared with a certain charging rate (e.g., 1C), the number of cycles until the capacity decreases by 40% decreases significantly. For example, the number of cycles may decrease to half under the conditions described above. Since the lifetime of a battery is determined based on multiple factors, it is necessary in practice to estimate based on complicated formulae. Nevertheless, in the example described above, the 42% charging time elongation significantly mitigates the adverse influence of rapid charging during a busy time slot on the lifetime of a battery.

### (Specific example 2 of charging time elongation effect)

With a conventional elevator system using a tail cord, the higher the building is, the longer the tail cord. Therefore, there is a stronger demand for eliminating tail cords with elevator systems of super high-rise buildings. There is a stronger demand for improving the maximum moving speed of the carriage **11** with elevator systems of super high-rise buildings. Therefore, even when the power transmitting electrode unit **120** is provided over the entire pathway of the elevator, there is only a small benefit for the high installation cost needed. This is because the charging time elongation effect per unit length of the power transmitting section decreases as the speed of the carriage **11** increases.

For example, consider the effect to be realized when a power transmitting electrode unit **120** as long as 40 m is installed in the shaft to enable power supply while moving. When 20 m/sec is assumed as the moving speed of the carriage **11** for a system for a super high-rise building, it is possible to ensure only 2 sec as the charging time for the battery **24.** When 5 m/sec is assumed as the moving speed of the carriage **11** for a common high-rise building, a power transmitting section length as long as 10 m is needed for ensuring a charging time of 2 sec. On the other hand, the extension of the power transmitting section that is needed for a 2 sec elongation of the charging time is only 2 m when the carriage **11** starts accelerating from rest with an acceleration of 1 m/(sec)². Also taking the effect during deceleration into account, the extension of the power transmitting section length can be shortened down to 0.5 m. Table 2 shows examples of calculated values of the extension of the power transmitting section that is needed for ensuring a charging time with elevator systems according to an reference example and the present embodiment.

**[Table 2]**

| Charging time | Reference example: charging while moving 20 m/sec | Embodiment: charging while accelerating/ decelerating 1 m/(sec)² | |
|---|---|---|---|
| 1 sec | 20 m | 0.51 m | -97% |
| 1.5 sec | 30 m | 1.13 m | -96% |
| 2 sec | 40 m | 2.01 m | -95% |

The reference (reference example) shown in Table 2 is an elevator system in which charging while moving at 20 m/sec is realized. With the elevator system of the present embodiment, the extension of the power transmitting section that is needed for realizing similar charging time elongation effect is reduced by 95% to 97% with respect to the reference example, making it clear that the installation is easier.

Table 3 also shows examples of calculated values of the power transmitting section length that are needed for ensuring a charging time. The reference shown in Table 3 is an elevator system having the function of charging while moving at 5 m/sec. With the elevator system of the present embodiment, the extension of the power transmitting section that is needed for realizing similar charging time elongation effect is reduced by 80% to 90% with respect to the reference example, making it clear that the installation is easier.

**[Table 3]**

| Charging time | Reference example: charging while moving 5 m/sec | Embodiment: charging while accelerating/ decelerating 1 m/(sec)² | |
|---|---|---|---|
| 1 sec | 5 m | 0.51 m | -90% |
| 1.5 sec | 7.5 m | 1.13 m | -84% |
| 2 sec | 10 m | 2.01 m | -80% |

With, the elevator system of the present embodiment, there is no need to define, as the power transmitting section **91,** the entire extent of the pathway of the carriage **11,** for reasons described above. The power transmitting electrode unit **120** includes a first portion that opposes at least a portion of the power receiving electrode unit **220** when the carriage **11** is at rest at the Np-th floor, which is a power-supplying floor, and a second portion that is an extension from the first portion in at least one of the upward and downward directions. As described above, the power transmitting section **91** may be set so that charging at rest can be done at a plurality of floors.

### (Installation of power transmitting electrode unit at floors where carriage is more likely to stop)

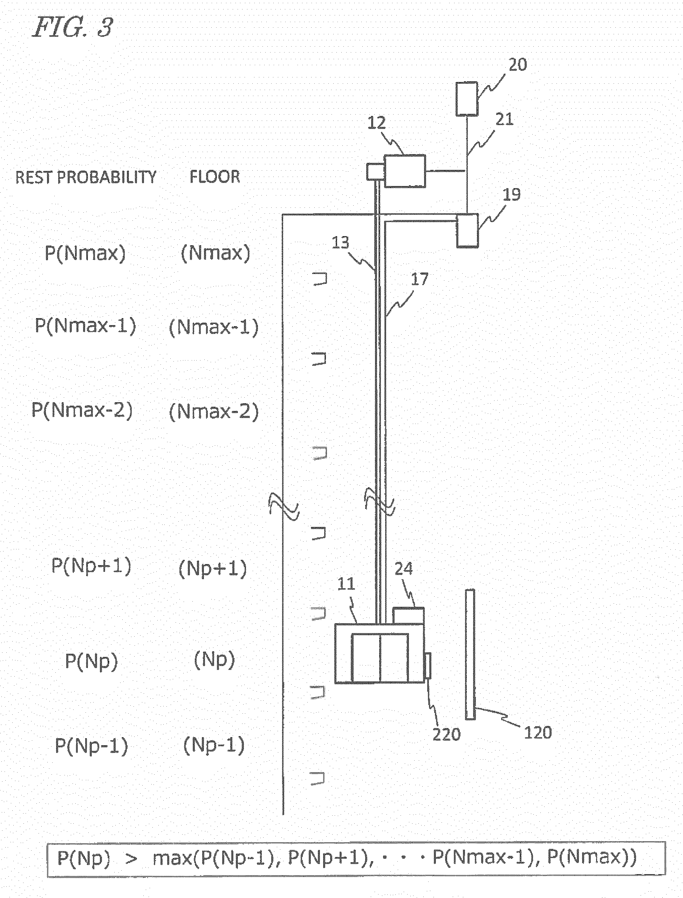

With an elevator system according to an embodiment of the present disclosure, the amount of time over which the carriage **11** rests at a power-supplying floor is preferably used as the charging time as much as possible. FIG. **3** shows a conceptual diagram of another embodiment of an elevator system of the present disclosure. Note that for the sake of simplicity, the power transmitting circuit **110,** the control circuit **150,** the power supply **310** and the power receiving circuit **210** shown in FIG. **1** are not shown in FIG. **3** and subsequent figures. FIG. **3** shows rest time probability of the carriage 11 for different floors. In the example shown in FIG. **3****,** the Np-th floor, which is a power-supplying floor, is set with the highest time probability for the carriage **11** to rest. That is, where P(Np-1), P(Np), P(Np+1), ..., P(Nmax-1), P(Nmax) are the time probabilities for the carriage **11** to rest at the respective floor, the rest time probability P(Np) for the power-supplying floor is higher than those for the other floors. In other words, in the example of FIG. **3****,** the following relationship is satisfied.
P(Np) > max(P(Np-1), P(Np+1), ..., P(Nmax-1), P(Nmax))

In order to determine the floor that has the highest rest time probability (hereinafter also referred to simply as the "rest probability"), the rest time distribution among floors is derived. The rest time distribution may be derived based on the status of operation during a particular time slot, e.g., during a busy time slot. This is because a busy time slot is a time slot during which it is difficult to ensure a long stop time at each floor, and during which rapid charging occurs that has the most adverse influence on the battery life.

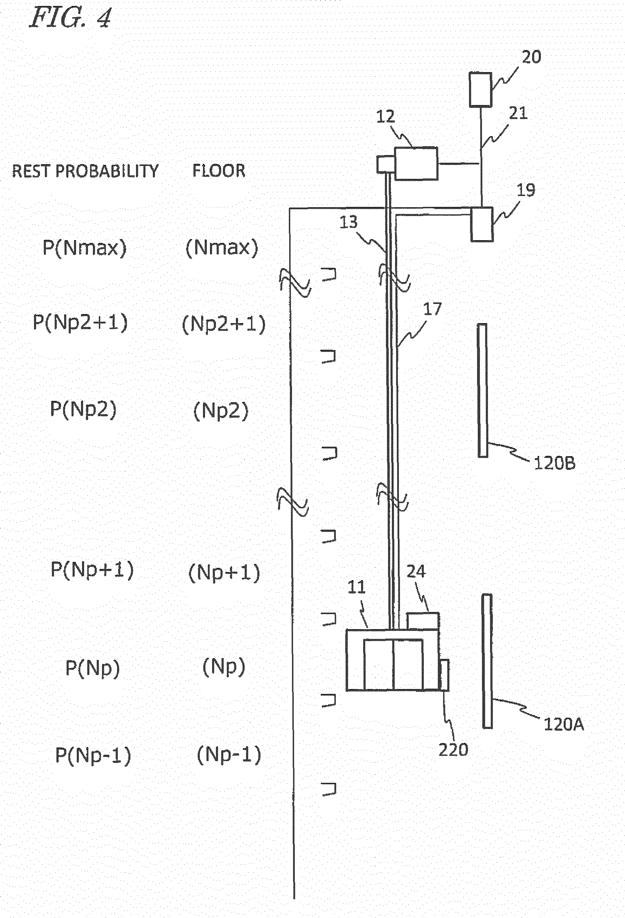

FIG. **4** is a diagram showing a configuration of another embodiment of the present disclosure. As shown in FIG. **4****,** a plurality of power transmitting electrode units are arranged with at least one floor interposed therebetween. In this case, the carriage **11** is charged at rest at the plurality of power-supplying floors. In the example of FIG. **4****,** two power-supplying floors, i.e., the first power-supplying floor (the Np-th floor) and the second power-supplying floor (the Np2-th floor), are set. In this case, a first power transmitting electrode unit **120A** is installed at the first power-supplying floor, and a second power transmitting electrode unit **120B** at the second power-supplying floor. The first power-supplying floor and the second power-supplying floor may be the two floors of the highest rest time probability of the carriage **11** during a particular time slot such as a busy time slot, for example. In such a case, the rest time probability P(Np) of the first power-supplying floor and the rest time probability P(Np2) of the second power-supplying floor are higher than the rest time probabilities of the other floors.

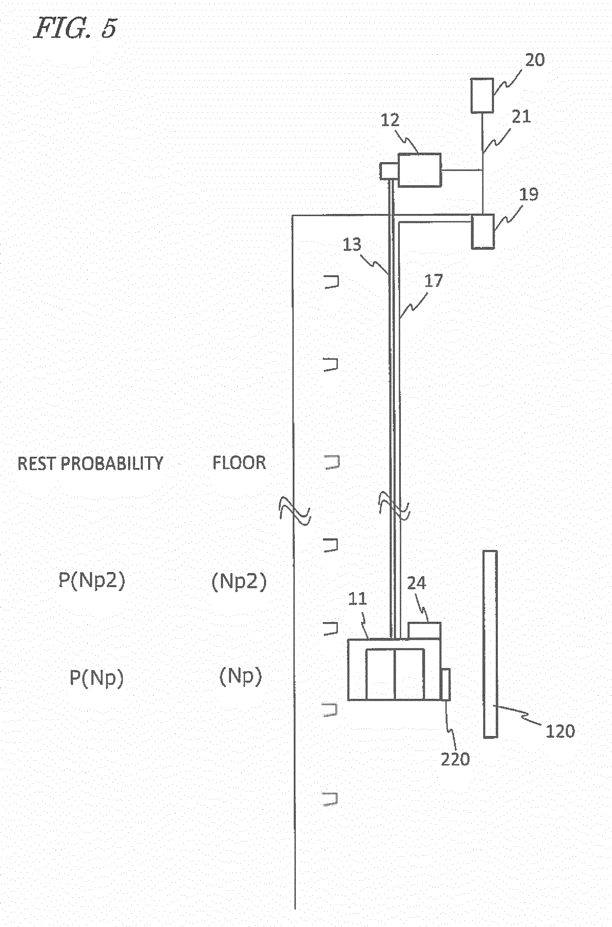

FIG. **5** is a diagram showing a configuration of still another embodiment of the present disclosure. Adjacent two floors may be set as power-supplying floors, as shown in FIG. **5****.** In such a case, the power transmitting electrode unit **120** may be installed bridging between the adjacent two floors.

If the adjacent two floors are both floors of a high rest probability, the moving speed between the adjacent floors can be of a particularly low value. Therefore, according to the embodiment of FIG. **5****,** it is possible to realize a longer charging time. The power transmitting section may be a power transmitting electrode unit 120 continuously extending bridging over three or more floors. For example, the entrance floor, which is often set at 1F on the ground, and the parking floors, which are often set at some floors underground, both have high rest probabilities. Therefore, when the power transmitting section includes a continuous range that extends over these floors, it is possible to ensure a long charging time during acceleration and deceleration.

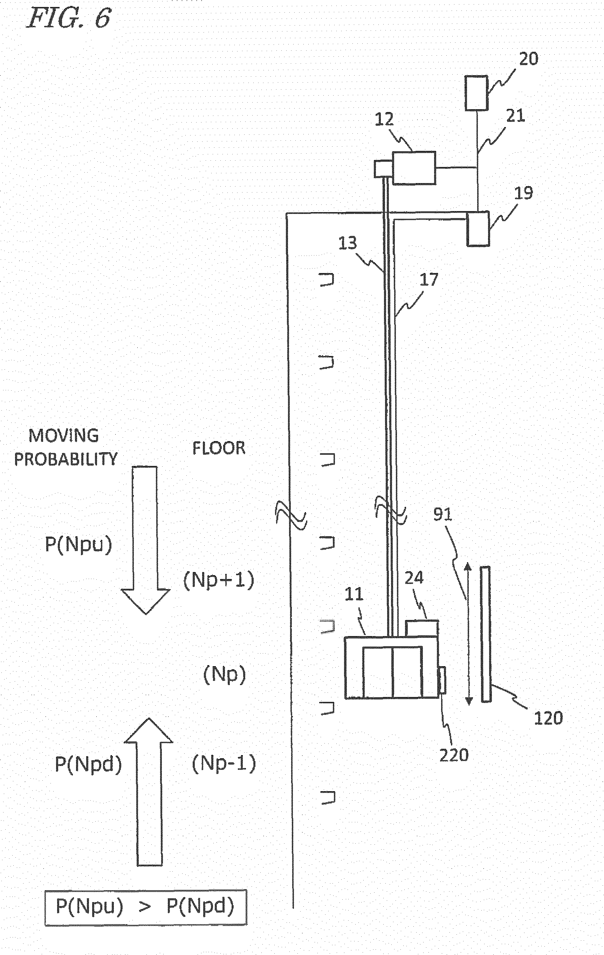

With an elevator system according to an embodiment of the present disclosure, at least one of the deceleration period before the carriage **11** stops at a power-supplying floor and the acceleration period after the stop contributes to the elongation of the charging time. In an embodiment in which the power transmitting electrode unit **120** is extended in one direction from a power-supplying floor, the power transmitting section may be extended in the direction from which the carriage **11** comes to the power-supplying floor with a higher probability, for example. FIG. **6** is a diagram showing a configuration of such an embodiment. As shown in FIG. **6****,** P(Npu) is the probability with which the carriage **11** comes from above before stopping at the power-supplying floor (the Np-th floor), and P(Npd) is the probability with which the carriage 11 comes from below before stopping at the power-supplying floor (the Np-th floor). The power transmitting section **91** is extended in the direction of the greater probability. In the example of FIG. **6****,** P(Npu)>P(Npd). Therefore, the power transmitting electrode unit **120** is extended toward the upper floor beyond the extent in the height direction of the Np-th floor.

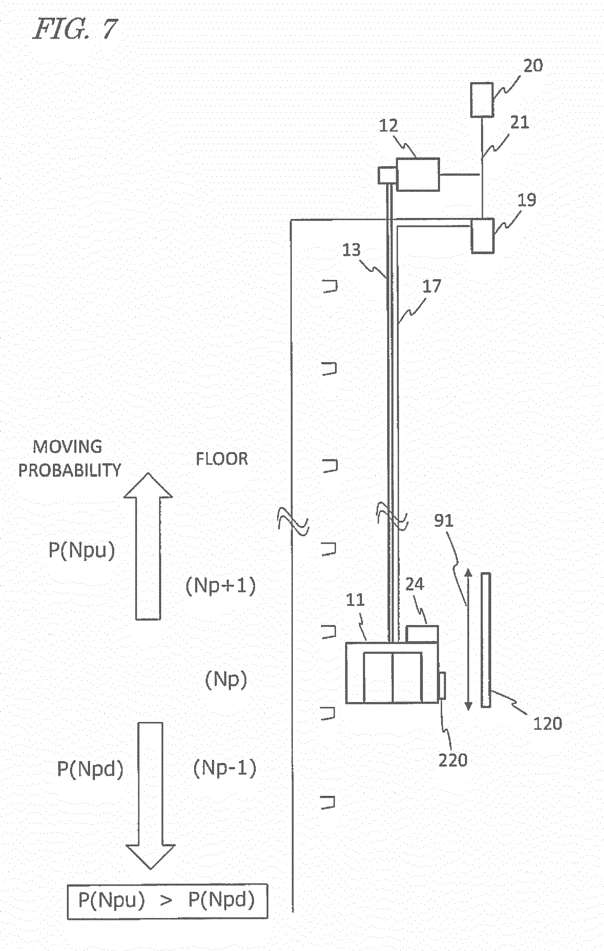

In another embodiment of the elevator system of the present disclosure, the power transmitting section may be extended in the direction toward which the carriage **11** moves from the power-supplying floor with a higher probability. FIG. **7** is a diagram showing a configuration of such an embodiment. P(Npu) is the probability with which the carriage **11** moves up after stopping at the power-supplying floor (the Np-th floor), and P(Npd) is the probability with which the carriage **11** moves down after stopping at the power-supplying floor. Also in this case, the power transmitting section **91** is extended in the direction of the greater probability. In the example of FIG. **7****,** P(Npu)>P(Npd). Therefore, the power transmitting electrode unit **120** is extended toward the upper floor beyond the extent in the height direction of the Np-th floor.

### (Setting power-supplying floor at floor where carriage stops frequently).

As described above, the amount of time over which the carriage **11** rests at a power-supplying floor (the Np-th floor) is preferably used as the charging time as much as possible. Therefore, a power-supplying floor is preferably set at a floor where the carriage **11** stops frequently.

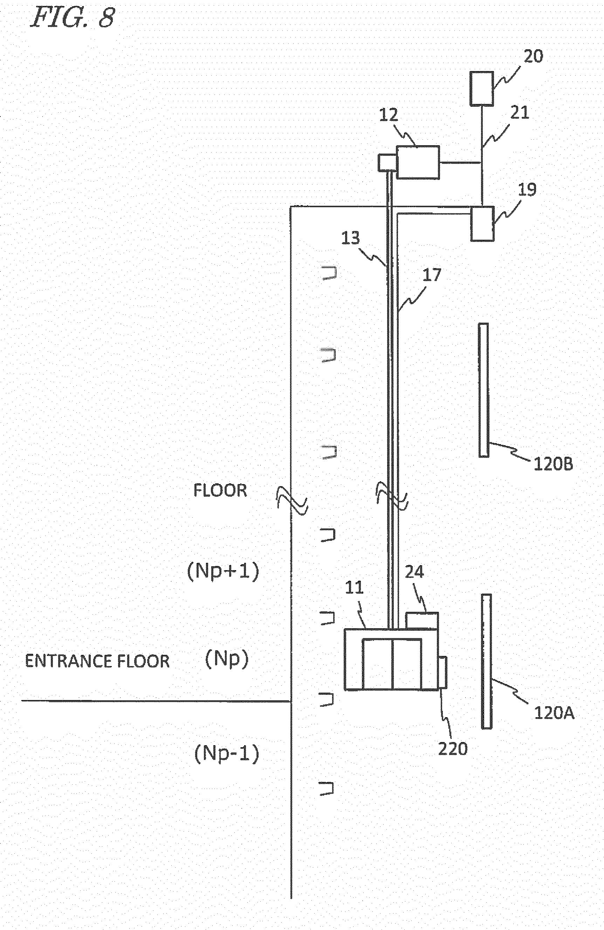

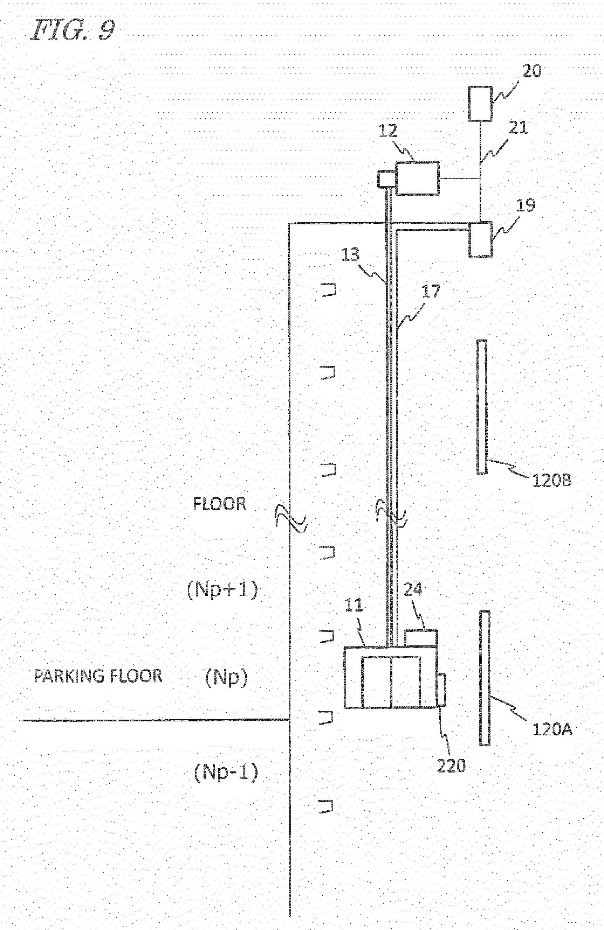

As shown in FIG. **8****,** the floor of the entrance hall that is used as the entrance/exit by the users of the building may be set as a power-supplying floor. The entrance floor may be 1F on the ground or may be a different floor. For example, the entrance floor may be set at a ground floor that is not an underground floor or 1F for the purpose of a smooth connection with a train station or an underground arcade. A parking floor may be provided, as shown in FIG. **9****,** assuming that users will use cars to come to the building. In such a case, the parking floor may be set as a power-supplying floor. The parking floor may be set at an underground floor or may be set at a ground floor other than 1F for shopping centers, and the like. In another embodiment of the elevator system of the present disclosure, the power-supplying floor may be set at a common floor, a shopping floor, a restaurant floor, or the like.

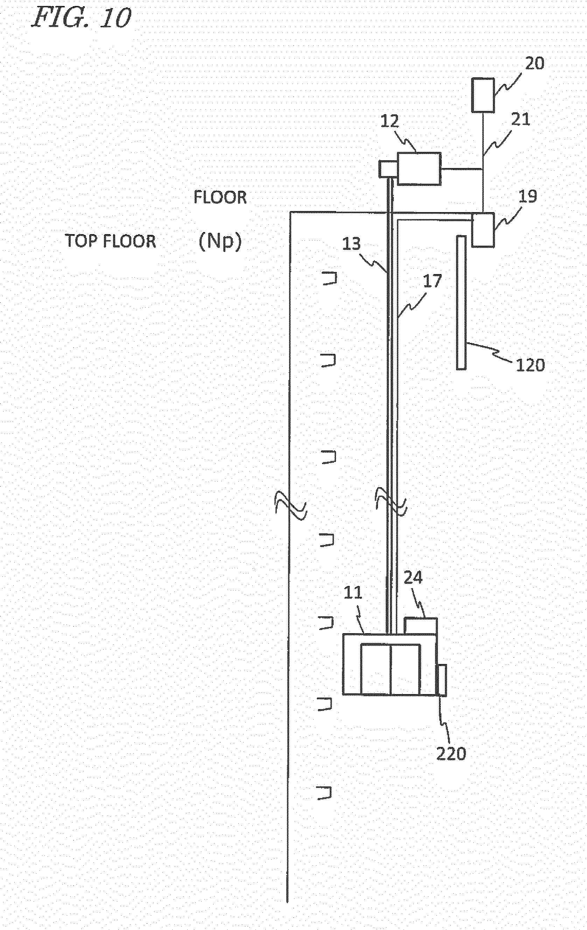

As shown in FIG. **10****,** the power-supplying floor may be set at the top floor of the building. Similarly, the power-supplying floor may be set at the bottom floor of the building. It is possible that the remaining level of the battery **24** is lowest when the carriage **11** comes to the top floor or the bottom floor of the building. Therefore, it is reasonable to set the top floor or the bottom floor as a power-supplying floor. For a similar reason, a floor close to the top floor or the bottom floor may be set as a power-supplying floor.

In an embodiment of the elevator system of the present disclosure, when the first power-supplying floor of the highest rest probability is on the lower side of the building, for example, another floor with a high rest probability on the higher side of the building may be selected as the second power-supplying floor where the power transmitting section is added. Needless to say, when the first power-supplying floor is on the upper side of the building, the second power-supplying floor may be provided at a floor on the lower side of the building.

In the elevator system, there may be a standby floor at which the carriage **11** stands by when the carriage **11** is not used for a certain period of time or longer. For example, when it is detected that the carriage **11** has not been used or called by a user for a certain period of time or longer with no passenger therein, the controller **19** moves the carriage **11** to the standby floor. Such a standby floor may be set as a power-supplying floor. A standby floor may be provided at at least one of an upper floor and a lower floor. When any one of the entrance floor, the parking floor, the top floor and the bottom floor is set as a power-supplying floor as shown in FIG. **8** to FIG. **10****,** the power-supplying floor may be set as the standby floor. A power-supplying floor may be set at a floor where the carriage **11** stops most frequently in a particular time slot. The particular time slot may be a busy time slot during which the carriage **11** stays at any floor over the shortest amount of time, for example.

### (Efficient setting of power transmitting section in view of installation cost)

In an embodiment of the elevator system of the present disclosure, a power-supplying floor may be set at a floor where the carriage **11** stops frequently, for example. The power transmitting section length may be set to be less than the length of the section over which the carriage **11** accelerates to reach its maximum speed starting from a power-supplying floor. Then, the length of the power transmitting electrode unit **120** is less than the length of the section over which the carriage **11** starts accelerating to reach its maximum speed prescribed in the specifications of the elevator system after having stopped at the power-supplying floor. Also when decelerating, the power transmitting section length may be set to be less than the length of the section from a point where the carriage **11** starts decelerating from its maximum speed (approaching a power-supplying floor where the carriage **11** stops frequently) to the power-supplying floor. Then, the length of the power transmitting electrode unit **120** is less than the length of the section from when the carriage **11** starts decelerating from its maximum speed prescribed in the specifications until the carriage **11** stops at the power-supplying floor. Although it is possible to charge the carriage **11** while moving at its maximum speed, it is then not possible to ensure a long charging time. Thus, in terms of both the unit manufacturing cost and the installation cost, it cannot be said to be cost-effective to preferentially set the power transmitting electrode unit 120 along a pathway where the carriage **11** is likely to move fast without decelerating. Note that when the installation cost is not an issue, the power transmitting electrode unit **120** may be installed including the section where the carriage moves at its maximum speed. For example, if it is not an issue, the power transmitting electrode unit 120 may be installed so as to extend across all the floors of the building.

### (Another embodiment of wireless power transmission system)

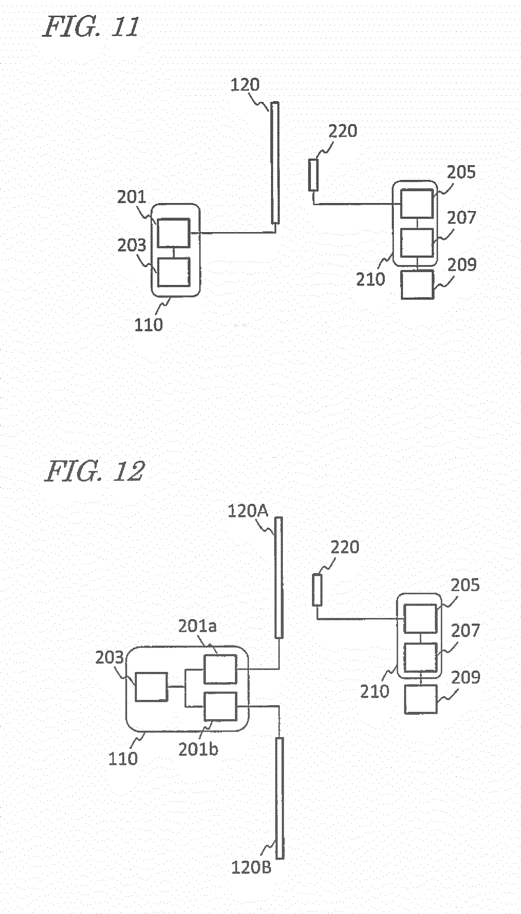

FIG. 11 shows an example of a block diagram showing a wireless power transmission system (hereinafter, "WPT system") to be introduced to an embodiment of the elevator system of the present disclosure. The WPT system includes the power transmitting electrode unit **120** and the power receiving electrode unit **220.** The power transmitting circuit **110** of the WPT system shown in FIG. **11** includes a matching circuit **201** and a frequency conversion circuit **203.** The power receiving circuit **210** of the WPT system includes a matching circuit **205** and a frequency conversion circuit **207.** The WPT system further includes a load **209.**

The power transmitting electrode unit **120** wirelessly transmits electric power to the power receiving electrode unit **220** via a high-frequency energy component. The high-frequency electric power is supplied to the power transmitting electrode unit **120** from the frequency conversion circuit **203** through the matching circuit **201.** When the input electric power is DC power, the frequency conversion circuit **203** serves as an inverter, and when the input electric power is AC power, the frequency conversion circuit **203** serves as a converter for one-time conversion to the transmission frequency. The high-frequency electric power received by the power receiving electrode unit **220** goes through the matching circuit **205,** and is then converted by the frequency conversion circuit **207** to a more appropriate form of electric power and supplied to the load **209** in the carriage **11.** The battery **24** described above is an example of the load **209.** The frequency conversion circuit **207** serves as a rectifier when the output electric power is DC power, and serves both as a converter and as an inverter when the output electric power is AC power. The matching circuits **201** and **205** may be omitted.

In the following description, it is assumed that DC power is primarily input to the frequency conversion circuit **203,** and the frequency conversion circuit **203** may be referred to as an inverter **203.**

FIG. **12** shows a block diagram of another embodiment of the WPT system of the present disclosure. In the example shown in FIG. **12****,** a plurality of power transmitting electrode units **120A** and **120B** and a plurality of matching circuits **201a** and **201b** are provided. The output terminals of the matching circuits **201a** and **201b** connected to the output terminals of the inverter **203** on the power-transmitting side are connected respectively to the power transmitting electrode units **120A** and **120B.** The power transmitting electrode units **120A** and **120B** are arranged in different regions along the pathway of the carriage **11.** In this case, the regions where the power transmitting electrode units **120A** and **120B** are arranged can equally serve as the power transmitting electrode unit described above. Hereinafter, the region where a power transmitting electrode unit is formed is defined as a "power transmitting electrode region". The configuration of FIG. **12** saves the cost of the inverter **203,** and can therefore realize the effect of reducing the cost. It is possible to easily realize the charging time elongation effect with a low cost.

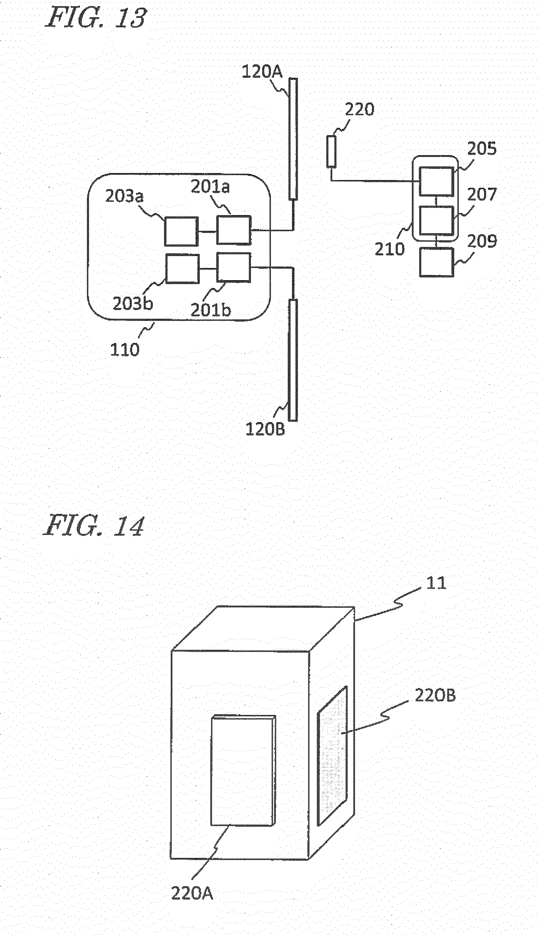

As shown in another configuration example of FIG. **13****,** there may be a plurality of inverters **203** that are individually connected to a plurality of matching circuits **201,** respectively, thereby obtaining the power transmitting circuit **110.** Since the cost of housings also influences the total cost, it is possible to realize the effect of reducing the cost by accommodating the power transmitting circuit **110** including the inverters **203** and the matching circuits **201** in a single housing.

FIG. **14** is a conceptual diagram showing another embodiment of the elevator system of the present disclosure. As shown in FIG. **14****,** a plurality of power receiving electrode units **220A** and **220B** may be arranged on side surfaces of the carriage **11.** In this case, a plurality of power transmitting electrode units are arranged at positions such that they can oppose the power receiving electrode units **220A** and **220B,** respectively. The power transmission from the first power transmitting electrode unit to the first power receiving electrode unit **220A** and the power transmission from the second power transmitting electrode unit to the second power receiving electrode unit **220B** are done simultaneously, and the electric powers received by the power receiving electrode units **220A** and **220B** can be combined together. The electrode units may be used selectively by determining the efficiency property, the output voltage property, or the like. By such selective use, a diversity operation may be realized that selects only the power transmission path with which a good power transmission property is obtained.

### (Regarding scheme)

With the elevator system and the WPT system according to an embodiment of the present disclosure, the energy in an area where electric power is transmitted wirelessly is composed of an electric field component. That is, the WPT technique of the electric field coupling scheme is used. Table 4 shows the charging time elongation when charging is performed also during acceleration and/or deceleration in addition to while at rest, and the necessary extension of the power transmitting section. The acceleration is 1 m/(sec)², and the stop time is 15 sec. As shown in Table 4, in order to elongate the charging time by 10% as compared with a case in which charging is done only during the 15 sec stop time, the power transmitting section can be extended by 0.285 m. Moreover, a 20% elongation can be realized by extending the power transmitting section by 1.133 m. A 30% elongation can be realized by extending the power transmitting section by 2.543 m.

**[Table 4]**

| Charging time elongation (%) | Power transmitting section extension needed (m) when only acceleration or deceleration effect is taken into account | Power transmitting section extension needed (m) when acceleration and deceleration are both taken into account |
|---|---|---|
| 10 | 1.133 | 0.285 |
| 20 | 4.515 | 1.133 |
| 30 | 10.148 | 2.543 |

With the power transmission of the magnetic field coupling scheme, which is currently under the process of standardization for electric automobiles while standing still, the length or the diameter of the power transmitting coil is as small as some tens of cm. In view of the height of a carriage of an elevator system, a power receiving electrode unit having a length of some meters of more is unlikely to be realized. In view of this, according to an embodiment of the elevator system and the WPT system of the present disclosure, the electric field coupling scheme is employed, in which the power transmitting electrode unit length is set to be longer than the power receiving electrode unit length. By arranging the power transmitting electrode unit longer than the power receiving electrode unit along the path of the carriage, charging while moving is realized, thereby elongating the total charging time.

The power transmitting electrode unit and the power receiving electrode unit may be arranged in parallel to each other or substantially in parallel to each other so that the fluctuation in the distance between the power transmitting electrode unit and the power receiving electrode unit does not seriously affect the power transmission property when the carriage moves. In the elevator system, the carriage 11 moves along rail, and there is therefore little fluctuation in the distance between the rail and the carriage 11. Therefore, the power receiving electrode unit 220 may be arranged on the side where the carriage 11 is connected to the rail.

### (Relationship between power transmitting electrode unit length and frequency)

As described above, the power transmitting electrode region according to an embodiment of the present disclosure may be provided at a floor where the carriage stops frequently. Particularly, when the carriage is expected to frequently stop at two or more floors adjacent to each other, a single power source may be used for a power transmitting electrode unit that covers two floors or more. With such a configuration, it is possible to ensure a long charging time at a lower cost and more efficiently. On the other hand, if the total length of the power transmitting electrode unit and the wire extending from the power transmitting electrode unit to the matching circuit becomes long, there will be an influence of the standing wave on the high frequency transmitted to the power receiving electrode. Therefore, the selection of the transmission frequency becomes important. In order to mitigate the influence of the node of the standing wave, the upper limit of the length of a power transmitting electrode unit that is continuous in the height direction is preferably set to be less than an appropriate phase length at the transmission frequency. By transmitting power at a lower frequency, a highly efficient power transmission can be realized.

With super high-rise buildings, which can receive great benefits by eliminating the tail cord, the height of each floor is expected to be about 4 m. When a power transmitting section is set so that charging at rest can be done at adjacent two floors, the power transmitting electrode unit length may be set to a length that is greater than or equal to 4 m + 0.4 m = 4.4 m.

Herein, the power receiving electrode unit length is assumed to be 0.4 m. Then, the power transmitting electrode unit length is 11 times or more of the power receiving electrode unit length. In order to avoid the influence of the standing wave, the electrode unit length may be set to be 1/20 the wavelength corresponding to the transmission frequency, for example. When the power transmitting electrode unit length is 4.4 m as described above, the power transmitting electrode unit length is less than or equal to 1/20 the wavelength in a frequency range of 3.4 MHz or less. If the configuration of the WPT system of FIG. 12 is employed, the frequency range or 6.8 MHz or less is a preferred range for the transmission frequency of the WPT section. Note that in Japan, power transmission of the electric field coupling scheme in the band of 425 kHz to 524 kHz and assumedly for IT equipment has been institutionalized. Therefore, with the electric field coupling scheme using at least a part of the frequency range, it is possible to realize a WPT section that conforms with the existing laws and regulations. Since the frequency range of the 6.78 MHz band has been set as the ISM band in various countries in the world, the WPT section can be realized by the electric field coupling scheme using this frequency range.

### (Introduction of power-transmitting side shield for stabilizing property)

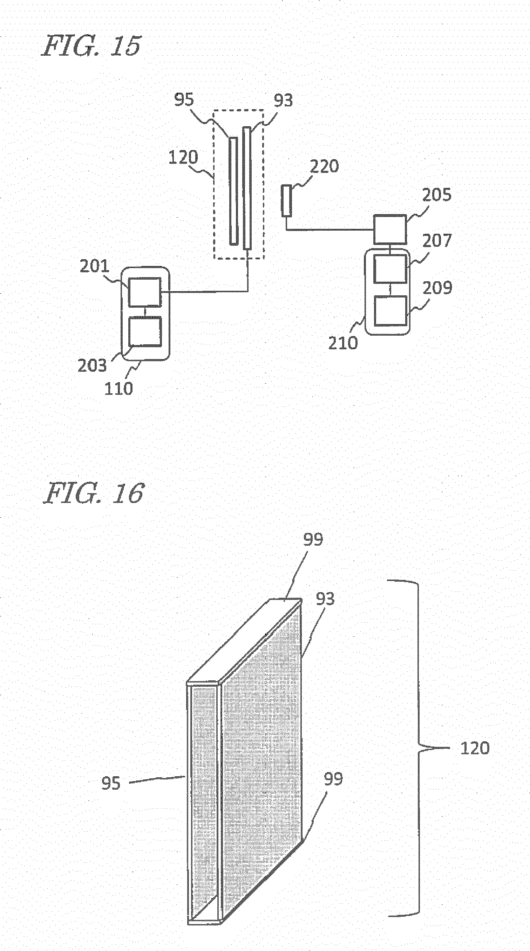

With an elevator system, metal members such as steel frames are often distributed around the shaft. With a WPT system of the electric field coupling scheme, the degree of coupling between the power transmitting electrode unit and the power receiving electrode unit, which determines the power transmission property, is defined by the coupling capacity between the power transmitting and receiving electrodes and the parasitic capacitance in each of the power transmitting and receiving electrode units. Since the parasitic capacitance lowers the degree of coupling, it is not preferred that parasitic capacitance occurs between metal members distributed around the power transmitting electrode unit and electrodes. On the other hand, it is also not preferred that an intended property is no longer realized because of a value of parasitic capacitance occurring that is different from the parasitic capacitance value expected at the time of design. Therefore, as shown in FIG. **15****,** a shield member **95** made of a conductor, or the like, may be arranged in advance, with a certain gap from the group of electrodes **93,** on the reverse side (the side that does not oppose the power receiving electrode unit **220**) of a group of electrodes **93** on the power-transmitting side. FIG. **15** shows the structure around the carriage of a wireless power transmission system of one embodiment. The shield member **95** and the group of electrodes **93** may be formed integral together, thereby forming the electrode unit **120.** Alternatively, the electrode unit **120** may be composed only of a group of electrodes for obtaining the output from the matching circuit **201**, and the shield member **95** may be configured separately. The shield member **95** may be arranged so as to oppose the entire surface of the group of electrodes **93,** or may be arranged so as to oppose only a portion thereof.

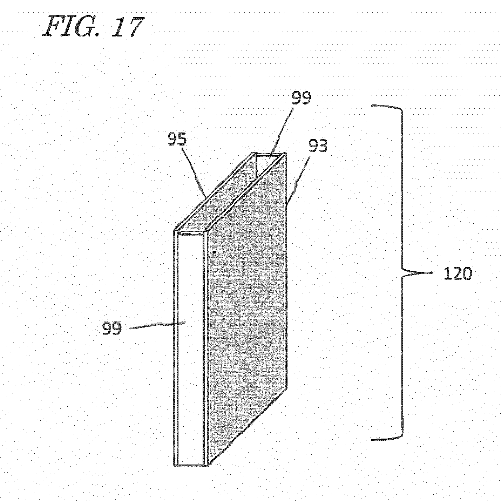

In order to avoid the wind pressure when the carriage passes, the group of electrodes **93** and the shield member **95** may be secured together via securing members **99** at limited positions such as the upper and lower surface portions, as in the embodiment shown in FIG. **16****.** Similarly, in order to avoid the wind pressure when the carriage passes, the group of electrodes **93** and the shield member **95** may be secured together via the securing members **99** at limited positions such as the side surface portions, as in the embodiment shown in FIG. **17****.**

Note that although configurations in which the shield structure is additionally arranged on the electrode unit on the power-transmitting side have been described above, the shield member may be arranged on the side of the electrode unit on the power-receiving side that does not oppose the electrode unit on the power-transmitting side. The shield member may be arranged both on the electrode unit on the power-transmitting side and on the electrode unit on the power-receiving side. The material of the shield member may be any of various metals such as copper or aluminum, for example.

### (Variable control of charging mode based on status of operation)

In an embodiment of the elevator system of the present disclosure, it is determined whether or not the present time is in a busy time slot based on the time information, the status of operation of the carriage, and other information, and the electric power to be supplied from the WPT system to the power storing device may be adjusted based on the determination result. For example, the battery charging rate can be set to be low by performing a control so that the electric power to be supplied from the WPT system is lowered during time slots other than busy time slots. As the criteria for determining whether or not the present time is in a busy time slot, it is possible to use information regarding the operation statuses in the past such as those from the same season, the previous day, the same day of the week, etc. It is possible to determine whether or not the present time is in a busy time slot by counting the number of people coming in and out of the building through the entrance/exit or the parking lot so as to estimate the number of people who use the elevator. It is possible to suppress the deterioration of the battery by setting the charging rate low while maintaining the utility for the users in a time slot other than a busy time slot. Such a control can be performed by the control circuit **150.** The control circuit **150** can set the AC power output from the power transmitting circuit **110** to be lower during a time slot other than a busy time slot than during the busy time slot, thereby lowering the charging rate of the power storing device.

### (Scheme of controlling output of wireless power transmission section)

Generally, in a WPT system, the output electric power or the output voltage can be controlled by using at least one control, such as changing the frequency, changing the input voltage, changing the duty ratio (changing the duty), controlling the phase of the power transmitting circuit, and controlling the operation of the DC-DC converter on the output side. On the other hand, it is known in the art that the load condition for realizing the maximum power transmission efficiency is restricted to a particular range, irrespective of the scheme such as a magnetic field scheme or an electric field scheme.

In an embodiment of the elevator system of the present disclosure, it is possible to employ a control of lowering the input voltage to the frequency conversion circuit **203** as an example of a control method for lowering the battery charging rate.

Similarly, it is possible to employ a duty control of the frequency conversion circuit **203,** wherein the duty ratio of the power transmitting circuit is lowered while maintaining the load condition for realizing the high power transmission efficiency.

With these two methods, it is possible to reduce the charging rate while maintaining the load value at the input terminal of the DC/DC converter in a condition range such that the high-efficiency wireless power transmission is maintained. Thus, they are better than other output control methods as control methods when lowering the charging rate, and it is possible to realize the advantageous effects described above while realizing power transmission with low heat generation.

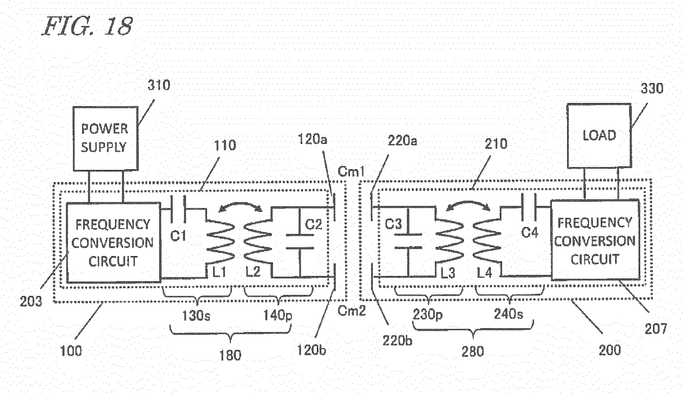

FIG. **18** is a block diagram showing an example of a schematic configuration of the WPT system in the elevator system. The WPT system includes the power transmitting device **100** and the power receiving device **200.** The power transmitting device **100** includes the power transmitting electrodes **120a** and **120b** and the power transmitting circuit **110.** The power receiving device **200** includes the power receiving electrodes **220a** and **220b** and the power receiving circuit **210.** The power receiving device **200** and the load **330** are installed in the carriage of the elevator system. The power transmitting circuit **110** includes the frequency conversion circuit **203** for converting the electric power supplied from the external power supply **310** to AC power, and the matching circuit **180** on the power-transmitting side connected to the frequency conversion circuit **203.** The power receiving circuit **210** includes the matching circuit **280** on the power-receiving side and the frequency conversion circuit **207.**

A configuration example of the matching circuit **180** will be described in detail. The matching circuit **180** includes a series resonance circuit **130s,** and a parallel resonance circuit **140p** that is inductively coupled to the series resonance circuit **130s.** The output terminal of the parallel resonance circuit **140p** is connected to the power transmitting electrodes **120a** and **120b.**

The power receiving electrodes **220a** and **220b** are capacitively coupled to the power transmitting electrodes **120a** and **120b,** and wirelessly receive the transmitted AC power. The matching circuit **280** includes a parallel resonance circuit **230p** connected to the power receiving electrode **220,** and a series resonance circuit **240s** inductively coupled to the parallel resonance circuit **230p.** The frequency conversion circuit **207** is connected to the series resonance circuit **240s,** and converts the received AC power to DC power and outputs the DC power.

Note that the configuration of the matching circuits **180** and **280** is not limited to the configuration of the present embodiment using series resonance circuits and parallel resonance circuits in combination with each other. The matching circuits **180** and **280,** if not needed, may be omitted.

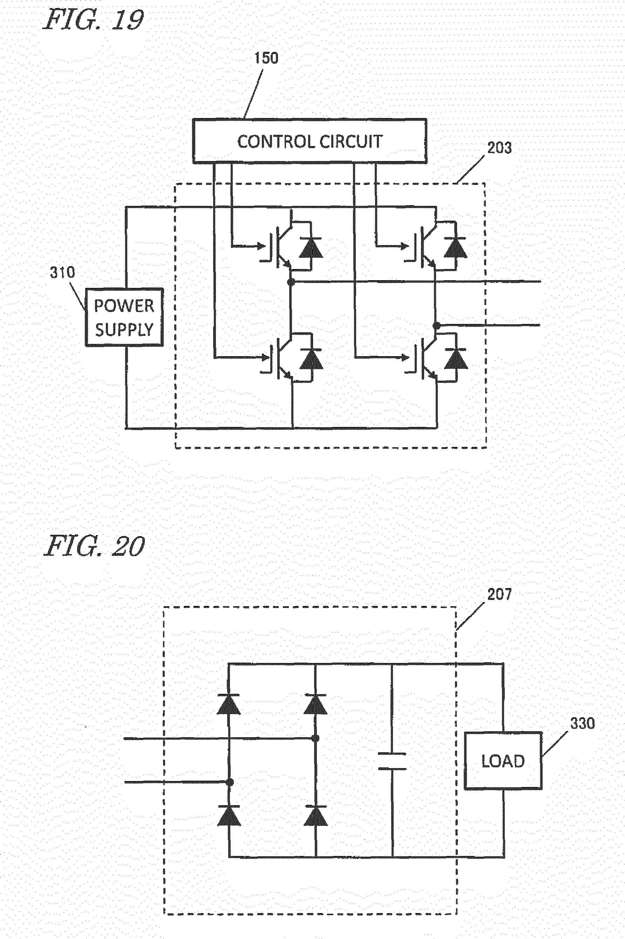

FIG. **19** is a diagram schematically showing a configuration example of the frequency conversion circuit **203.** In this example, the frequency conversion circuit **203** includes a full bridge inverter circuit including four switching elements (e.g., transistors such as IGBTs or MOSFETs). The control circuit **150** includes a gate driver for outputting control signals for controlling ON (conducting) and OFF (non-conducting) of the switching elements, and a processor such as a microcontroller for causing the gate driver to output the control signals. A half bridge inverter circuit or another oscillation circuit such as a class E may be used instead of a full bridge inverter circuit shown in the figure. The frequency conversion circuit **203** may include a communication modem and various sensors for measuring the voltage, the current, etc.

FIG. **20** is a diagram schematically showing a configuration example of the frequency conversion circuit **207.** In this example, the frequency conversion circuit 207 is a full-wave rectifier circuit including a diode bridge and a smoothing capacitor. The frequency conversion circuit **207** may have another rectifier configuration. In addition to a rectifier circuit, the frequency conversion circuit **207** may include various circuits such as a constant voltage-constant current control circuit or a communication modem. The frequency conversion circuit **207** typically converts the received AC energy to DC energy that can be used by the load **330,** but may also convert to AC energy. Various sensors for measuring the voltage, the current, etc., output from the series resonance circuit **240s** may be included in the frequency conversion circuit **207.**

The coils of the series resonance circuit 130s, the parallel resonance circuit **140p,** the parallel resonance circuit **230p** and the series resonance circuit **240s** may each be a planar coil or a laminated coil formed on a circuit board, or a wound coil of a copper wire, a litz wire, or a twist wire, for example. The capacitors of the series resonance circuit 130s, the parallel resonance circuit **140p,** the parallel resonance circuit **230p** and the series resonance circuit **240s** may each be any type of a capacitor that has a chip shape or a lead shape, for example. The capacitance between two wires with the air therebetween may serve as these capacitors. The self-resonance property of each coil may be used instead of these capacitors.

The resonant frequency f0 of each of the series resonance circuit 130s, the parallel resonance circuit **140p,** the parallel resonance circuit **230p** and the series resonance circuit 240s may be set so as to substantially coincide with the transmission frequency f when transmitting power. The resonant frequency f0 of the resonance circuits does not need to strictly coincide with the transmission frequency f1. Each resonant frequency f0 may be set to a value that is in the range of about 50% to about 150% of the transmission frequency f1, for example. The frequency f1 of power transmission may be set to, for example, 50 Hz to 300 GHz, for example, 20 kHz to 10 GHz in one example, and 79 kHz to 20 MHz in another example, and 79 kHz to 14 MHz in still another example.

In the present embodiment, there is a gap between the power transmitting electrodes **120a** and **120b** and the power receiving electrodes **220a** and **220b,** and the distance therebetween is relatively long (e.g., about 10 mm to about 20 mm). Therefore, capacitances Cm1 and Cm2 between the electrodes are very small, and the impedance of the power transmitting electrodes **120a** and **120b** and the power receiving electrodes **220a** and **220b** is very high (e.g., about several kΩ). In contrast, the impedance of the power transmitting circuit **110** and the power receiving circuit **210** is as low as about several Ω, for example. Therefore, in the present embodiment, the parallel resonance circuit **140p** and the parallel resonance circuit **230p** are arranged on the side closer to the power transmitting electrodes **120a** and **120b** and the power receiving electrodes **220a** and **2220b,** respectively, and the series resonance circuit **130s** and the series resonance circuit **240s** are arranged on the side closer to the power transmitting circuit **110** and the power receiving circuit **210,** respectively. With such a configuration, it is easy to match the impedance.

### (Method 1 for suppressing leak electric field: introduction of side GND)

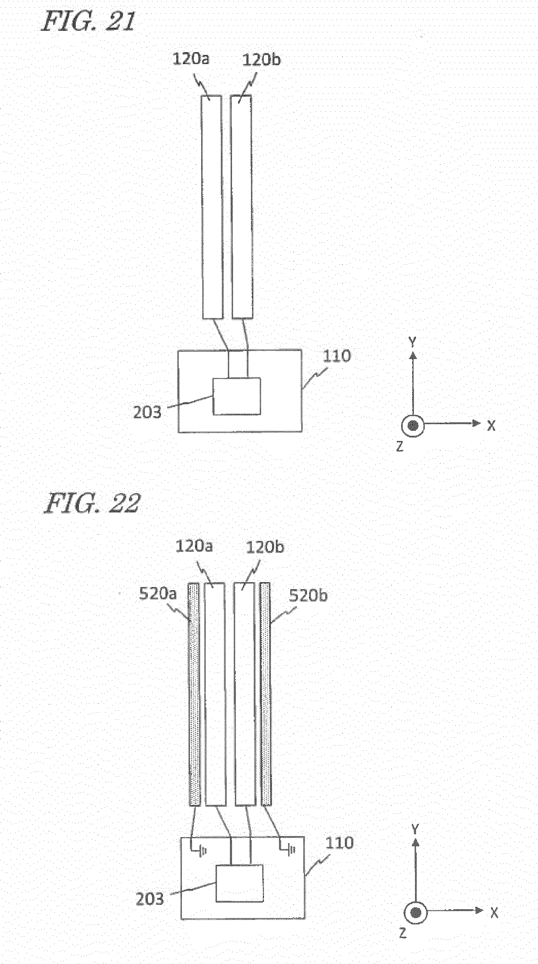

An example of a specific electrode configuration of the power transmitting electrode unit and the power receiving electrode unit in the WPT system introduced to an elevator system of an embodiment of the present disclosure will be described. FIG. 21 is a plan view schematically showing a configuration example of the power transmitting electrode unit. The power transmitting electrode unit of this example includes a pair of electrodes **120a** and **120b** as shown in FIG. **21****.** Herein, high-frequency voltages of opposite signs (positive and negative) of the transmission frequency output from the frequency conversion circuit **203** are applied to the electrodes **120a** and **120b.** While FIG. **21** shows an example of the power transmitting electrodes, this similarly applies to the power receiving electrodes. A pair of a positive electrode and a negative electrode are provided so as to cross the power transmitting electrodes so that a positive high-frequency voltage and a negative high-frequency voltage are produced, respectively, when receiving electric power.

FIG. **22** is a diagram showing another example of the power transmitting electrode unit. In the electrode configuration of FIG. **22****,** side electrodes **520a** and **520b** (referred to also as side GNDs) connected to the GND terminals of the power transmitting circuit **110** are arranged on the respective sides the electrodes **120a** and **120b** to which high-frequency voltages are applied. The side electrodes **520a** and **520b** effectively suppress the leakage of a high-frequency electric field in the X-axis direction of the figure leaking out to the surrounding area due to the high-frequency voltages applied to the electrodes **120a** and **120b.** By suppressing the electric field leakage intensity into the surrounding area, it is possible to reduce interference with electronic devices such as sensors operating in the surrounding area or wires connecting between devices.

As is apparent from the operating principle, the side electrodes **520a** and **520b** are arranged on the outer side of the electrodes to which high-frequency voltages are applied in the electrode unit. Note that only one of the side electrodes **520a** and **520b** may be arranged on one side of the electrodes **120a** and **120b.** The side electrodes **520a** and **520b** may be provided on the power receiving electrode side. A pair of power receiving electrodes of a similar line width may be arranged also on the power receiving electrode side so as to oppose, over a wide area, the power transmitting electrodes **120a** and **120b** to which high-frequency voltages are applied. However, since the side electrodes do not contribute to the power transmission itself between the power transmitting electrode unit and the power receiving electrode unit, the power transmitting electrode unit and the power receiving electrode unit do not need to have similar configurations. By introducing the side electrodes to one of the electrode units, it is possible to realize an advantageous effect of suppressing the leak electric field.

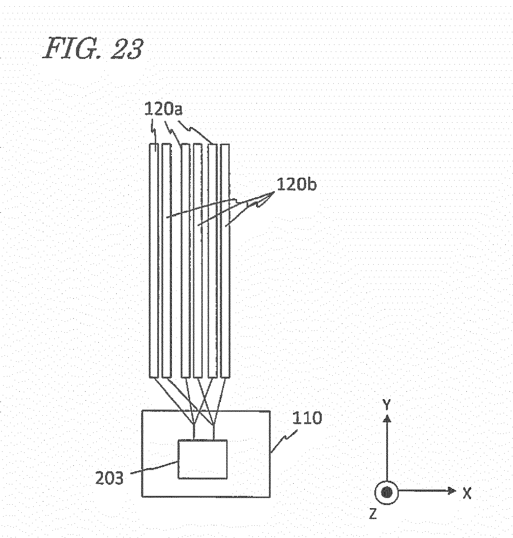

FIG. **23** shows an example of an electrode configuration of a power transmitting electrode unit according to another embodiment of the WPT system introduced to an elevator system of the present disclosure. In the electrode configuration of FIG. 23, each of the electrodes 120a and **120b** is divided in parallel in the X-axis direction into a plurality of pieces, and the electrodes **120a** and **120b** are arranged alternating with each other. In the example of FIG. **23****,** first voltages of the same phase are applied to the first, third and fifth electrodes **120a** from the left, and second voltage whose phase is different by about 180 degrees from that of the first voltages are applied to the second, fourth and sixth electrodes **120b** from the left. Note that the phase difference between the first and second voltages is not limited to 180 degrees, but it may be more than 90 degrees and less than 270 degrees. With such a divided configuration, it is possible to effectively reduce the high-frequency electric field intensity leaking from the electrodes **120a** and **120b** in the ±Z-axis directions of the figure. By suppressing the electric field leakage intensity to the surrounding area, it is possible to reduce interference with electronic devices operating in the surrounding area.

With the configuration of FIG. **23****,** the higher the number of electrode divisions is, the more pronounced the effect of suppressing the electric field intensity into the surrounding area. On the other hand, with the configuration of FIG. **23****,** it is preferred that the power transmitting electrode unit and the power receiving electrode unit both have a common electrode configuration. In order to maintain a high capacitance between the power transmitting and receiving electrodes that contribute to power transmission, the electrodes may be arranged so that the width of a divided electrode is kept larger than the maximum amount of positional misalignment between the power transmitting and receiving electrodes in the X-axis direction of the figure. Since an elevator system is a system in which a carriage moves in the height direction (the Y direction) along the pathway, the amount of positional misalignment in the lateral direction (the X direction) of the carriage is limited in a suitable range. Therefore, as an electrode unit configuration of a WPT system introduced to an elevator system, it is possible to easily realize the effect of electrode parallel division without detracting from the power transmission property of the WPT system.

As described above, the present disclosure includes wireless power transmission systems, elevator systems, power transmitting devices, power transmitting electrode units, power receiving devices, power receiving electrode units and power transmission methods as set forth in items below.
[Item 1] A wireless power transmission system for use in an elevator system including a carriage that moves up and down along a path, a power storing device provided in the carriage, and a wireless power transmission system, the wireless power transmission system including:
   a power transmitting electrode unit arranged along the path and including at least two power transmitting electrodes for outputting AC power; and
   a power receiving electrode unit arranged on the carriage and including at least two power receiving electrodes that respectively oppose the at least two power transmitting electrodes for receiving the output AC power, wherein:
   the power transmitting electrodes are longer than the power receiving electrodes;
   the power transmitting electrode unit is arranged so as to oppose at least a portion of the power receiving electrode unit when the carriage is at rest at a predetermined power-supplying floor and is extended in at least one of an upward direction and a downward direction;
   electric power is transmitted from the power transmitting electrode unit to the power receiving electrode unit when the carriage is at rest at the power-supplying floor, when the carriage is accelerating off the power-supplying floor, and/or when the carriage is decelerating toward the power-supplying floor; and
   the power storing device is charged by the electric power received by the power receiving electrode unit.
[Item 2] The wireless power transmission system according to item 1, wherein the power transmitting electrode unit includes a first portion that opposes the power receiving electrode unit when the carriage is at rest at the power-supplying floor and a second portion that is an extension from the first portion both in the upward direction and the downward direction.
[Item 3] The wireless power transmission system according to item 1 or 2, wherein:
   the power transmitting electrode unit is extended so as to oppose at least a portion of the power receiving electrode unit when the carriage is at rest at another floor that is adjacent to the power-supplying floor; and
   electric power is transmitted from the power transmitting electrode unit to the power receiving electrode unit even when the carriage is at rest at the other floor.
[Item 4] The wireless power transmission system according to any one of items 1 to 3, wherein:
   in the elevator system, there is a standby floor at which the carriage stands by when the carriage is not used for a certain period of time or longer; and
   the power-supplying floor is the standby floor.
[Item 5] The wireless power transmission system according to any one of items 1 to 4, wherein the power-supplying floor is a floor of a building in which the elevator system is installed that has the highest time probability for the carriage to rest in a particular time slot.
[Item 6] The wireless power transmission system according to any one of items 1 to 5, wherein the power-supplying floor is a floor where there is an entrance/exit or a parking lot of a building in which the elevator system is installed.
[Item 7] The wireless power transmission system according to any one of items 1 to 6, wherein:
   the power transmitting electrode unit is arranged so as to oppose at least a portion of the power receiving electrode unit when the carriage is at rest at the power-supplying floor and is extended in one of the upward direction and the downward direction;
   the carriage comes to the power-supplying floor from the one of the upward direction and the downward direction with a higher probability than coming to the power-supplying floor from the other one of the upward direction and the downward direction; and/or
   the carriage moves in the one of the upward direction and the downward direction after stopping at the power-supplying floor with a higher probability than moving in the other one of the upward direction and the downward direction after stopping at the power-supplying floor.
[Item 8] The wireless power transmission system according to any one of items 1 to 7, wherein a length of the power transmitting electrode unit is less than a length of a section over which the carriage starts accelerating to reach its maximum speed prescribed in specifications of the elevator system after having stopped at the power-supplying floor, and/or a length of a section from a point where the carriage starts decelerating from its maximum speed prescribed in the specifications of the elevator system to a point where the carriage stops at the power-supplying floor.
[Item 9] The wireless power transmission system according to any one of items 1 to 8, further including:
   a power transmitting circuit that outputs AC power to the at least two power transmitting electrodes;
   a control circuit that controls the power transmitting circuit; and
   a power receiving circuit that converts the AC power received by at least two power receiving electrodes to another form of electric power to supply the converted power to the power storing device,
   wherein the control circuit instructs the power transmitting circuit to output the AC power when the carriage is at rest at the power-supplying floor, when the carriage is accelerating off the power-supplying floor, and/or when the carriage is decelerating toward the power-supplying floor.
[Item 10] The wireless power transmission system according to any one of items 1 to 9, wherein the control circuit sets the AC power output from the power transmitting circuit to be lower during a time slot other than a busy time slot than during the busy time slot, thereby lowering a charging rate of the power storing device.
[Item 11] The wireless power transmission system according to any one of items 1 to 10, further including a second power transmitting electrode unit including at least two power transmitting electrodes arranged along the path, wherein:
   the power transmitting electrodes of the second power transmitting electrode unit are longer than the power receiving electrodes;
   the second power transmitting electrode unit is arranged so as to oppose at least a portion of the second power receiving electrode unit when the carriage is at rest at a second power-supplying floor that is different from the power-supplying floor and is extended in at least one of an upward direction and a downward direction; and
   electric power is transmitted from the power transmitting electrode unit to the power receiving electrode unit when the carriage is at rest at the second power-supplying floor, when the carriage is accelerating off the second power-supplying floor, and/or when the carriage is decelerating toward the second power-supplying floor.
[Item 12] An elevator system including:
   the wireless power transmission system according to any one of items 1 to 11;
   the carriage; and
   the power storing device.
[Item 13] The power transmitting electrode unit for use in the wireless power transmission system according to any one of items 1 to 11.
[Item 14] A power transmitting device comprising:
   the power transmitting electrode unit according to item 13;
   a power transmitting circuit that outputs AC power to the at least two power transmitting electrodes; and
   a control circuit that controls the power transmitting circuit,
   wherein the control circuit instructs the power transmitting circuit to output the AC power when the carriage is at rest at the power-supplying floor, when the carriage is accelerating off the power-supplying floor, and/or when the carriage is decelerating toward the power-supplying floor.
[Item 15] The power receiving electrode unit for use in the wireless power transmission system according to any one of items 1 to 11.
[Item 16] A power receiving device comprising:
   the power receiving electrode unit according to item 15; and
   a power receiving circuit that converts the AC power received by the at least two power receiving electrodes to another form of electric power to supply the converted power to the power storing device.
[Item 17] A power transmission method for an elevator system including a carriage that moves up and down along a path, a power storing device provided in the carriage, and a wireless power transmission system, wherein:
   the wireless power transmission system includes:
      a power transmitting electrode unit arranged along the path and including at least two power transmitting electrodes for outputting AC power; and
      a power receiving electrode unit arranged on the carriage and including at least two power receiving electrodes that respectively oppose the at least two power transmitting electrodes for receiving the output AC power, wherein:
         the power transmitting electrodes are longer than the power receiving electrodes;
         the power transmitting electrode unit is arranged so as to oppose at least a portion of the power receiving electrode unit when the carriage is at rest at a predetermined power-supplying floor and is extended in at least one of an upward direction and a downward direction;
            the wireless power transmission method includes:
            transmitting electric power from the power transmitting electrode unit to the power receiving electrode unit when the carriage is at rest at the power-supplying floor, when the carriage is accelerating off the power-supplying floor, and/or when the carriage is decelerating toward the power-supplying floor; and
            charging the power storing device by the electric power received by the power receiving electrode unit.

The technique of the present disclosure can be used for an elevator system in a high-rise building, for example. According to an embodiment of the present disclosure, it is possible to avoid deterioration of the battery when wirelessly supplying electric power from the building side to the carriage, and it is possible to reduce the installation cost of the electric power supply system. Thus, it is possible to eliminate a tail cord for supplying electric power that has been indispensable for a carriage.

While the present invention has been described with respect to exemplary embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

This application is based on Japanese Patent Applications No. 2017-148046 filed on July 31, 2017, the entire contents of which are hereby incorporated by reference.

## Claims

1. A wireless power transmission system for use in an elevator system comprising a carriage that moves up and down along a path, a power storing device provided in the carriage, and a wireless power transmission system, the wireless power transmission system comprising:
a power transmitting electrode unit arranged along the path and including at least two power transmitting electrodes for outputting AC power; and
a power receiving electrode unit arranged on the carriage and including at least two power receiving electrodes that respectively oppose the at least two power transmitting electrodes for receiving the output AC power, wherein:
the power transmitting electrodes are longer than the power receiving electrodes;
the power transmitting electrode unit is arranged so as to oppose at least a portion of the power receiving electrode unit when the carriage is at rest at a predetermined power-supplying floor and is extended in at least one of an upward direction and a downward direction;
electric power is transmitted from the power transmitting electrode unit to the power receiving electrode unit when the carriage is at rest at the power-supplying floor, when the carriage is accelerating off the power-supplying floor, and/or when the carriage is decelerating toward the power-supplying floor; and
the power storing device is charged by the electric power received by the power receiving electrode unit.

2. The wireless power transmission system according to claim 1, wherein:
the power transmitting electrode unit is extended so as to oppose at least a portion of the power receiving electrode unit when the carriage is at rest at another floor that is adjacent to the power-supplying floor; and
electric power is transmitted from the power transmitting electrode unit to the power receiving electrode unit even when the carriage is at rest at the other floor.

3. The wireless power transmission system according to claim 1 or 2, wherein:
in the elevator system, there is a standby floor at which the carriage stands by when the carriage is not used for a certain period of time or longer; and
the power-supplying floor is the standby floor.

4. The wireless power transmission system according to any one of claims 1 to 3, wherein the power-supplying floor is a floor of a building in which the elevator system is installed that has the highest time probability for the carriage to rest in a particular time slot.

5. The wireless power transmission system according to any one of claims 1 to 4, wherein the power-supplying floor is a floor where there is an entrance/exit or a parking lot of a building in which the elevator system is installed.

6. The wireless power transmission system according to any one of claims 1 to 5, wherein:
the power transmitting electrode unit is arranged so as to oppose at least a portion of the power receiving electrode unit when the carriage is at rest at the power-supplying floor and is extended in one of the upward direction and the downward direction;
the carriage comes to the power-supplying floor from the one of the upward direction and the downward direction with a higher probability than coming to the power-supplying floor from the other one of the upward direction and the downward direction; and/or
the carriage moves in the one of the upward direction and the downward direction after stopping at the power-supplying floor with a higher probability than moving in the other one of the upward direction and the downward direction after stopping at the power-supplying floor.

7. The wireless power transmission system according to any one of claims 1 to 6, wherein a length of the power transmitting electrode unit is less than a length of a section over which the carriage starts accelerating to reach its maximum speed prescribed in specifications of the elevator system after having stopped at the power-supplying floor, and/or a length of a section from a point where the carriage starts decelerating from its maximum speed prescribed in the specifications of the elevator system to a point where the carriage stops at the power-supplying floor.

8. The wireless power transmission system according to any one of claims 1 to 7, further comprising:
a power transmitting circuit that outputs AC power to the at least two power transmitting electrodes;
a control circuit that controls the power transmitting circuit; and
a power receiving circuit that converts the AC power received by at least two power receiving electrodes to another form of electric power to supply the converted power to the power storing device,
wherein the control circuit instructs the power transmitting circuit to output the AC power when the carriage is at rest at the power-supplying floor, when the carriage is accelerating off the power-supplying floor, and/or when the carriage is decelerating toward the power-supplying floor.

9. The wireless power transmission system according to any one of claims 1 to 8, wherein the control circuit sets the AC power output from the power transmitting circuit to be lower during a time slot other than a busy time slot than during the busy time slot, thereby lowering a charging rate of the power storing device.

10. The wireless power transmission system according to any one of claims 1 to 9, further comprising a second power transmitting electrode unit including at least two power transmitting electrodes arranged along the path, wherein:
the power transmitting electrodes of the second power transmitting electrode unit are longer than the power receiving electrodes;
the second power transmitting electrode unit is arranged so as to oppose at least a portion of the second power receiving electrode unit when the carriage is at rest at a second power-supplying floor that is different from the power-supplying floor and is extended in at least one of an upward direction and a downward direction; and
electric power is transmitted from the power transmitting electrode unit to the power receiving electrode unit when the carriage is at rest at the second power-supplying floor, when the carriage is accelerating off the second power-supplying floor, and/or when the carriage is decelerating toward the second power-supplying floor.

11. An elevator system comprising:
the wireless power transmission system according to any one of claims 1 to 10;
the carriage; and
the power storing device,

12. The power transmitting electrode unit for use in the wireless power transmission system according to any one of claims 1 to 10.

13. A power transmitting device comprising:
the power transmitting electrode unit according to claim 12;
a power transmitting circuit that outputs AC power to the at least two power transmitting electrodes; and
a control circuit that controls the power transmitting circuit,
wherein the control circuit instructs the power transmitting circuit to output the AC power when the carriage is at rest at the power-supplying floor, when the carriage is accelerating off the power-supplying floor, and/or when the carriage is decelerating toward the power-supplying floor.

14. The power receiving electrode unit for use in the wireless power transmission system according to any one of claims 1 to 10.

15. A power receiving device comprising:
the power receiving electrode unit according to claim 14; and
a power receiving circuit that converts the AC power received by the at least two power receiving electrodes to another form of electric power to supply the converted power to the power storing device.
